(19) Europäisches Patentamt
European Patent Office
Office européen des brevets

(11) **EP 1 939 894 A1**

(12) **EUROPEAN PATENT APPLICATION**
published in accordance with Art. 153(4) EPC

(43) Date of publication:
**02.07.2008 Bulletin 2008/27**

(51) Int Cl.:
*H01B 3/00* (2006.01)     *C04B 35/00* (2006.01)
*C08K 3/00* (2006.01)     *H01G 4/12* (2006.01)

(21) Application number: **06810037.9**

(22) Date of filing: **01.09.2006**

(86) International application number:
**PCT/JP2006/317300**

(87) International publication number:
**WO 2007/029605 (15.03.2007 Gazette 2007/11)**

(84) Designated Contracting States:
**DE FR GB NL**

(30) Priority: **06.09.2005 JP 2005257450**

(71) Applicant: **TORAY INDUSTRIES, INC.**
**Tokyo 103-8666 (JP)**

(72) Inventors:
• **NONAKA, Toshihisa**
**Otsu-shi, Shiga 520-2264 (JP)**

• **HARA, Yoshitake**
**Otsu-shi, Shiga 520-0842 (JP)**
• **YOSHIOKA, Masahiro**
**Otsu-shi, Shiga 520-0827 (JP)**

(74) Representative: **Schaeberle, Steffen et al**
**Hoefer & Partner**
**Patentanwälte**
**Pilgersheimer Strasse 20**
**81543 München (DE)**

(54) **PASTE COMPOSITION, DIELECTRIC COMPOSITION, CAPACITOR, AND METHOD FOR PRODUCTION OF PASTE COMPOSITION**

(57)     [Problem to be solved] To provide a dielectric composition capable of forming a transparent high dielectric constant layer in the transparent portions of parts of information display such as flat panel displays, flexible displays, portable information terminal displays, touch panels, etc., so that the transparent high dielectric constant layer can be used as an interlayer insulation film in combination with transparent electrodes, etc. for forming transparent capacitors.

[Solution] A paste composition containing (a) a resin, (b) high dielectric constant inorganic particles having a perovskite crystal structure, and (c) an organic solvent, wherein the average particle diameter of the high dielectric constant inorganic particles is 0.002 μm to 0.06 μm, and the amount of all organic solvents is 35 wt% to 85 wt% based on the total amount of the paste composition. Further, a dielectric composition containing (a) a resin and (b) high dielectric constant inorganic particles having a perovskite crystal structure, wherein the average particle diameter of the high dielectric constant inorganic particles (b) is 0.002 μm to 0.06 μm.

EP 1 939 894 A1

**Description**

[Technical field]

The present invention relates to a paste composition and a dielectric composition capable of forming a transparent high dielectric constant layer in the transparent portions of parts of information display such as flat panel displays, flexible displays, electronic paper, portable information terminal displays and touch panels, so that the transparent high dielectric constant layer can be used as an interlayer insulation film in combination with transparent electrodes, etc. for forming transparent capacitors, etc. This invention also relates to a transparent capacitor formed by using the dielectric composition.

[Background art]

Known methods for preparing an interlayer insulation film for capacitors to be contained in package substrates respectively comprise the steps of coating, drying and curing a paste composition with high dielectric constant inorganic particles dispersed in a resin (see Patent Documents 1 and 2). However, the interlayer insulation film prepared by either of these methods is opaque for such reasons that the particles used are large in particle diameter and that the film is thick. It is difficult to use such a film as a transparent dielectric film.

On the other hand, known is a technique in which high dielectric constant inorganic particles are dispersed in a resin alignment layer for liquid-crystal to enhance the relative dielectric constant to 6 or 7 (see Patent Document 3). This technique can achieve a relative dielectric constant corresponding to 2 to 2.5 times that of the resin per se, but since the relative dielectric constant value is as small as 6 to 7, the capacitance of the capacitor formed by using the film as the interlayer insulation film is unpractically small.

The dispersion of inorganic particles into a resin material can be achieved by sufficiently dispersing the inorganic particles into an organic solvent, to produce a dispersion, and mixing the dispersion with the resin. Commercially available inorganic particles having an average particle diameter on the order of nanometers to tens of nanometers are often provided as powder particles (secondary particles) with an average particle diameter of tens of micrometers formed by allowing individual particles (primary particles) to moderately cohere to each other. Therefore, to produce a dispersion of inorganic particles with an average particle diameter of 0. 06 $\mu$m or less, it is necessary to loosen these secondary particles existing as aggregates in a dispersion medium, for producing a dispersion having primary particles stably dispersed in it. However, if the particle diameter of the inorganic particles becomes further smaller, the mechanism for applying shearing stresses to the inorganic particles cohering to each other cannot follow the particle diameter, and it becomes very difficult to uniformly disperse inorganic particles in the dispersion medium. Further, since the rate of the surface area of each particle to the weight of the particle becomes high, the progression of dispersion increases the viscosity of the dispersion, making it difficult to further promote dispersion.

On the other hand, known methods for dispersing inorganic particles in the state of primary particles include a method of using a dispersion apparatus such as a homogenizer, beads mill or ultrasonic dispersion machine. Especially for dispersing inorganic particles into submicron particles with an average particle diameter of 0.06 $\mu$m or less, a beads mill can be preferably used, since the shearing stresses by the friction of fine beads can promote dispersion.

For example, there is a method in which silica particles with a particle diameter of 70 nm or less are dispersed into an organic solvent using a beads mill (see Patent Document 4). However, the method described in Patent Document 4 is a method for silica particles which is an inorganic particle with high polarity and relatively easy to disperse into an organic solvent, and is not effective for other inorganic particles. Further, even though the particles are silica particles easy to disperse, the organic solvent used as a dispersion medium is limited to an alcohol solvent, and after completion of dispersion using a beads mill, a centrifuge is used to make the particle diameter smaller. Furthermore, Patent Document 4 shows dispersion examples for particles lower in polarity than silica particles such as alumina particles, but no particular particle diameter distribution is shown for other particles than silica particles. So, it is considered difficult to achieve dispersion down to primary particles. Particles small in polarity include barium titanate particles that are high dielectric constant inorganic particles having a perovskite crystal structure.

Moreover, a method for dispersing carbon particles on the order of nanometers using a beads mill is also proposed (see Patent Document 5). However, in the method described in Patent Document 5, water, which has high polarity, is used as the dispersion medium, and dispersion is easier than that in a general organic solvent. Therefore, the method described in Patent Document 5 is not effective for general organic solvents.

In these conventional dispersion methods, the degree of dispersion mostly depends on the material and size of the inorganic particles and the material of the dispersion medium. Especially in the case where any of these conventional dispersion methods is applied for dispersing high dielectric constant inorganic particles having a perovskite crystal structure, it is very difficult to realize stable dispersibility.

[Patent Document 1] JP2005-38821A (Claims)
[Patent Document 2] JP2004-285105A (Claims)
[Patent Document 3] JP4-70818A (Claims)
[Patent Document 4] JP2004-346288A (Page 6, Examples)
[Patent Document 5] US Patent Publication No. 2005/8560

[Disclosure of the invention]

[Problem to be solved by the invention]

In this situation, this invention provides a paste composition and a dielectric composition capable of forming a transparent high dielectric constant layer in transparent portions, so that the transparent high dielectric constant layer can be used as an interlayer insulation film in combination with transparent electrodes, etc. for forming transparent capacitors or as a transparent dielectric layer capable of controlling charged amounts. This invention also provides a transparent capacitor formed by using the dielectric composition.

[Means for solving the problem]

This invention provides a paste composition containing (a) a resin, (b) a high dielectric constant inorganic particles having a perovskite crystal structure, and (c) an organic solvent, wherein the average particle diameter of the high dielectric constant inorganic particles (b) is 0.002 $\mu$m to 0.06 $\mu$m, and the amount of all organic solvents is 35 wt% to 85 wt% based on the total amount of the paste composition. This invention also provides a production process thereof.
Another mode of this invention is a dielectric composition containing (a) a resin and (b) high dielectric constant inorganic particles having a perovskite crystal structure, wherein the average particle diameter of the high dielectric constant inorganic particles (b) is 0.002 $\mu$m to 0.06 $\mu$m. This invention also provides a capacitor comprising said dielectric composition as an insulation film.

[Effects of the invention]

This invention can provide a dielectric composition having a large relative dielectric constant and a high optical transmissivity in the entire wavelength range from 400 to 700 nm, and also a paste composition as a raw material for obtaining the dielectric composition. Further, the composition of this invention is small in leak current and large in high voltage holding ratio even as a film as thin as 1 $\mu$m. Furthermore, the dielectric composition can provide an interlayer insulation film for capacitors in applications requiring a high visible light transmissivity such as parts of display.

[Brief description of the drawing]

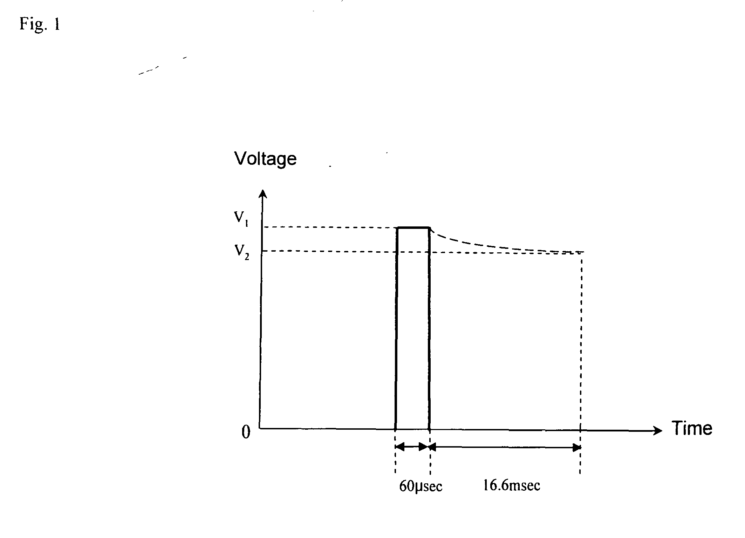

[Fig. 1] is a diagram showing the relation between the potential differences between the upper electrode and the ITO transparent electrode and an applied rectangular pulse, used for calculating the voltage holding ratio in the examples.

[The best modes for carrying out the invention]

The paste composition of this invention contains (a) a resin, (b) high dielectric constant inorganic particles having a perovskite crystal structure, and (c) an organic solvent, wherein the average particle diameter of the high dielectric constant inorganic particles is 0.002 $\mu$m to 0.06 $\mu$m, and the amount of all organic solvents is 35 wt% to 85 wt% based on the total amount of the paste composition.
The average particle diameter of the high dielectric constant inorganic particles having a perovskite crystal structure (b) used in this invention is 0. 002 $\mu$m to 0. 06 $\mu$m. A preferred range is 0.002 $\mu$m to 0.04 $\mu$m, and it is more preferred that the average particle diameter is 0.002 $\mu$m or more and 0.03 $\mu$m or less. If the average particle diameter of the high dielectric constant inorganic particles having a perovskite crystal structure (b) is 0.06 $\mu$m or less, the dielectric composition obtained by curing the paste composition is likely to be smooth on the surface, and because of it, the scattering of light on the surface becomes small. As a result, the optical transmissivity can be made large. The intensity of Rayleigh scattering experienced by a propagating light beam has a positive correlation with the third power of the particle diameter of the particles existing in the medium through which the light beam passes. So, if the particle diameter of the high dielectric constant inorganic particles having a perovskite crystal structure (b) is smaller, the Rayleigh scattering to inhibit the passing of the light beam by the high dielectric constant inorganic particles (b) becomes smaller. In the case where the average particle diameter of the high dielectric constant inorganic particles having a perovskite crystal

3

structure (b) is 0.04 $\mu$m or less, when light is transmitted through the dielectric composition obtained by curing the paste composition, the effect of inhibiting the Rayleigh scattering caused by the high dielectric constant inorganic particles (b) becomes remarkable, and the optical transmissivity can be easily made large. In the case where the average particle diameter of the high dielectric constant inorganic particles having a perovskite crystal structure (b) is 0.03 $\mu$m or less, the settling of the high dielectric constant inorganic particles (b) in the paste is unlikely to occur. In the case where the average particle diameter of the high dielectric constant inorganic particles having a perovskite crystal structure (b) is 0.002 $\mu$m or more, since the crystallinity of the high dielectric constant inorganic particles becomes good, the dielectric constant of the high dielectric constant inorganic particles (b) can be made large, and hence the dielectric constant of the dielectric composition can be easily made large.

The amount of all organic solvents, in the paste composition of this invention is 35 wt% to 85 wt% based on the total amount of the paste composition. It is preferred that the amount of all organic solvents is 45 wt% or more and 75 wt% or less. If the amount of all organic solvents is 85 wt% or less based on the total amount of the paste composition, the solid content of the paste is sufficiently large. So, even when the coating film formed is thin, a continuous film can be easily obtained. If the amount of all organic solvents is 75 wt% or less based on the total weight of the paste composition, the formation of voids caused by the volatilization of the organic solvents during drying can be inhibited. Therefore, the dielectric constant of the dielectric composition can be made large, and the Rayleigh scattering caused by the voids can be inhibited, and the optical transmissivity can be enhanced. Further, since the volume of voids causing moisture absorption is small, the physical changes attributable to the effect of humidity and water content can be kept small. If the amount of organic solvents is 35 wt% or more based on the total amount of the paste composition, the excessive cohesion of the high dielectric constant inorganic particles before dispersion treatment can be prevented, allowing the viscosity to be kept low. If the viscosity is very high at the time when dispersion treatment is started, the dispersion treatment by a dispersion apparatus such as a beads mill may not be able to be started. However, if the viscosity is low, the dispersion treatment by such a dispersion apparatus can be easily performed. If the amount of organic solvents is 45 wt% or more based on the total amount of the paste composition, the viscosity of the paste can be kept low after the high dielectric constant inorganic particles are dispersed uniformly, and a coating film highly uniform in film thickness can be easily formed.

The paste composition can be prepared, for example, by adding the high dielectric constant inorganic particles to a liquid resin or a resin solution, and mixing them for performing dispersion, or by dispersing the high dielectric constant inorganic particles into a proper organic solvent, to prepare a dispersion, and mixing the dispersion and a liquid resin or a resin solution (let-down method), etc. The method for dispersing the high dielectric constant inorganic particles into a resin or an organic solvent is not especially limited, and for example, a method of using an ultrasonic dispersion machine, ball mill, roll mill, Clearmix, homogenizer, beads mill or medium dispersion machine, etc. can be used. Especially it is preferred to use a ball mill, homogenizer or beads mill, since a high dispersion level can be achieved.

When the high dielectric constant inorganic particles are dispersed, the surface treatment of the high dielectric constant inorganic particles, for example, the addition of a dispersant into the composition, the addition of a surfactant or the addition of a solvent, etc. can be performed, for enhancing dispersibility.

The surface treatment of high dielectric constant inorganic particles can be performed by using any of various coupling agents such as a silane coupling agent, titanium coupling agent or aluminum coupling agent, fatty acid, or phosphoric acid compound, etc., or can also be rosin treatment, acid treatment, or basic treatment, etc. In this case, the surface treatment of high dielectric constant inorganic particles can be performed by applying any of said treating agents to the surfaces of high dielectric constant inorganic particles before the composition is prepared, or by adding any of said treating agents into the composition, so that the treating agent can be deposited on the surfaces of high dielectric constant inorganic particles as a result.

Examples of the dispersant added to the composition include those having an acid group such as phosphoric acid, carboxylic acids, fatty acids, their esters, etc. In the case where high dielectric constant inorganic particles basic on the surfaces such as barium titanate particles are dispersed, acid-base interaction can be used to let the dispersant interact with the surfaces of the high dielectric constant inorganic particles. So, it is effective to use a dispersant with acid groups. Especially a compound having phosphoric acid ester skeletons can be preferably used. Examples of the dispersant containing a compound having phosphoric acid ester skeletons include trade names "Dysperbyk-111" and "BYK-W9010" respectively produced by BYK Japan K.K., etc. Further, alkyl phosphates such as trimethyl phosphate, triethyl phosphate and tributyl phosphate, phosphoric acid acrylate, etc. may also be effective, as the case may be. Furthermore, the dispersant added to the composition can also be used as a surface treating agent of the high dielectric constant inorganic particles.

It is preferred that the added amount of the dispersant is 2 wt% to 25 wt% based on the amount of the high dielectric constant inorganic particles. If the amount of the dispersant is 2 wt% or more, the high dielectric constant inorganic particles can be easily well dispersed. The dispersant covers the surfaces of the particles obtained by loosening the aggregates of particles by dispersion treatment, etc. and has an effect of preventing the particles from cohering to each other again, hence keeping the particles dispersed. If the amount of the dispersant is 2 wt% or more based on the amount of the high dielectric constant inorganic particles, said effect can be exhibited. It is more preferred that the amount of the dispersant is 5 wt% or more based on the amount of the high dielectric constant inorganic particles, since even if the particle diameter of the high dielectric constant inorganic particles is 0.02 $\mu$m or less, said effect of the dispersant can be exhibited and good dispersion can be obtained. As a result, the optical transmissivity of the dielectric composition can be easily made large. If the amount of the dispersant is 25 wt% or less based on the amount of the high electric constant inorganic particles, the dielectric constant can be easily made large.

Other means for achieving a good dispersion level include the addition of a nonionic, cationic or anionic surfactant, a wetting agent such as a polyhydric carboxylate, an amphiphatic substance, a resin having high steric hindrance substituent groups, etc. Any of these additives can also be used as a surface treating agent of the high dielectric constant inorganic particles. Further, an organic solvent can also be added to control the polarity of the system during or after dispersion. The organic solvent is only required to be selected from those capable of resolving the resin and compatible with the dispersant. Examples of the organic solvent include alcohols such as ethanol, i-propanol, n-butanol, benzyl alcohol, isobutyl alcohol and methoxymethylbutanol, aromatic hydrocarbons such as chlorobenzene, benzene, toluene, xylene and mesitylene, cellosolves such as methyl cellosolve, ethyl cellosolve and butyl cellosolve, cellosolve esters such as methyl cellosolve acetate, ethyl cellosolve acetate and butyl cellosolve acetate, propylene glycol esters such as propylene glycol monomethyl ether acetate and propylene glycol monoethyl ether acetate, ethers such as 1,2-dimethoxyethane, 1,2-diethoxyethane, tetrahydrofuran and anisole, ketones such as methyl ethyl ketone, methyl isobutyl ketone, methyl-n-amyl ketone, cyclohexanone, $\gamma$-butyrolactone, $\gamma$-butyrolactam, dioxane, acetone, cyclohexanone and cyclopentanone, N,N,-dimethylformamide, dimethylacetamide, N-methylpyrrolidone, dimethyl sulfoxide, sulfolane, tetrahydrofuran, isophorone, trichloroethylene, ethyl lactate, butyl acetate, propylene glycol monomethyl ether, etc., and mixtures containing one or more of them.

It is preferred that the organic solvent used in this invention has a boiling point of 160°C or higher. If the boiling point of the organic solvent is 160°C or higher, the formation of voids in the dielectric composition is inhibited, and the relative dielectric constant of the dielectric composition can be easily enhanced. In the case where the boiling point is lower than 160°C, since the volatilization rate of the organic solvent is high, the increase of compactness by mass transfer at the time of heat treatment does not catch up with the volatilization, causing voids to increase, and the dielectric constant of the dielectric composition often declines. More preferred is 180°C or higher, and further more preferred is 200°C or higher. Further, it is preferred that the organic solvent used in this invention has a boiling point of 300°C or lower. More preferred is 280°C or lower. If the boiling point is higher than 280°C, the treatment for removing the organic solvent must be performed at a high temperature, and the high temperature treatment decomposes the resin, to deteriorate the dielectric property and to lower the mechanical strength. Further, if the boiling point is higher than 300°C, the resin is heavily decomposed to lower the mechanical strength. The organic solvent used in the paste composition of this invention can be only one organic solvent with a boiling point of 160°C or higher. However, as far as the paste composition contains an organic solvent with a boiling point of 160°C or higher, even if it contains a solvent other than said organic solvent, the effect of inhibiting the formation of voids can be easily obtained. Further, as required, the paste composition may contain such additives as a stabilizer, dispersant, anti-settling agent, plasticizer, antioxidant, crosslinking agent, crosslinking accelerator, dissolution regulator, surfactant and antifoaming agent.

Examples of the organic solvent with a boiling point of 160°C or higher include mesitylene, acetonylacetone, methylcyclohexanone, diisobutyl ketone, methyl phenyl ketone, dimethyl sulfoxide, $\gamma$-butyrolactone, isophorone, diethylformamide, N,N-dimethylacetamide, N-methylpyrrolidone, $\gamma$-butyrolactam, ethylene glycol monoacetate, ethylene glycol diacetate, 3-methoxy-3-methylbutanol, its acetate, 3-methoxybutyl acetate, 2-ethylhexyl acetate, oxalic acid esters, diethyl malonate, maleic acid esters, propylene carbonate, butyl cellosolve, ethyl carbitol, etc.

In this invention, the boiling point means the boiling point at 1 atmospheric pressure, namely, the boiling point at a pressure of $1.01325 \times 10^5$ N/m$^2$. The boiling point can be measured using a publicly known technique, and the technique is not especially limited. For example, Swietoslawski type ebulliometer can be used for measuring the boiling point.

Meanwhile, if the packing rate of the high dielectric constant inorganic particles is higher, the influence by the amount of the organic solvent is larger, and in the case where the high dielectric constant inorganic particles account for 80 wt% or more of the total weight of the ingredients of the paste composition excluding the organic solvent, the effect of this invention is especially large.

The method for coating a substrate or the like with the paste composition is not especially limited. For example, a coating method using a screen printing machine, blade coater, spin coater or bar coater, etc. can be used. In succession, the coating film has its organic solvent removed and thermally cured using a heater such as a hot plate or oven.

The substrate or the like to be coated with the paste composition can be selected, for example, from organic substrates, inorganic substrates and these substrates with circuit component materials arranged on them. Examples of the organic substrates include resin substrates, paper base copper clad laminates such as paper/phenol copper clad laminate, paper/epoxy copper clad laminate and paper/polyester copper clad laminate, glass base copper clad laminates such as glass fabric/epoxy copper clad laminate, glass fabric/polyimide copper clad laminate and glass fabric/teflon (registered trademark) copper clad laminate, composite copper clad laminates such as paper/glass fabric/epoxy copper clad laminate and nonwoven glass fabric/epoxy copper clad laminate, resin substrates such as polyetherimide substrate, polyether ketone substrate, polysulfone resin substrate, polycarbonate substrate, polyimide substrate and polyester substrate, flexible substrates such as polyester film, polyester copper clad film substrate, polyimide film, aramid film, polyimide copper clad film substrate and various liquid crystal polymer films.

Examples of the inorganic substrates include ceramic substrates such as alumina substrate, aluminum nitride substrate and silicon carbide substrate, metal substrates such as aluminum base substrate and iron base substrate, glass substrate, silicone substrate, quartz substrate, etc.

Examples of circuit component materials include conductors containing such a metal as silver, gold, copper, chromium, nickel, titanium and their alloys, indium-tin oxide (ITO), indium-zinc oxide, tin oxide, indium oxide or zinc oxide, or containing any of these metals doped with another element, resistors containing an inorganic oxide, etc., low dielectric substances containing a glass material and/or resin, etc., high dielectric substances containing a resin, high dielectric constant inorganic particles, etc., insulators containing a glass material, etc.

The dielectric composition of this invention contains (a) a resin and (b) high dielectric constant inorganic particles having a perovskite crystal structure, wherein the average particle diameter of the high dielectric constant inorganic particles (b) is 0.002 $\mu$m to 0.06 $\mu$m. It is preferred that the optical transmissivity of the dielectric composition of this invention in the entire wavelength range from 400 to 700 is 50% to 100%. A more preferred range is 70% to 100%, and a further more preferred range is 90% to 100%. If the optical transmissivity of the dielectric composition in the entire wavelength range from 400 to 700 nm is 50% or more, the function of transparency to display information by the light transmitting through the dielectric composition can be satisfied. If the optical transmissivity of the dielectric composition in the entire wavelength range from 400 to 700 nm is 70% or more, the light transmitting through the dielectric composition can be used to easily display information by a monochrometer. If the optical transmissivity of the dielectric composition in the entire wavelength range from 400 to 700 nm is 90% or more, the light transmitting through the dielectric composition can be used to easily display information in colors. In this case, that the optical transmissivity of the dielectric composition in the entire wavelength range from 400 to 700 nm is 50% to 100% is equivalent to that the smallest value of the optical transmissivity in the spectrum of the light transmitting through the dielectric composition in a wavelength range from 400 to 700 nm is 50% or more, in the case where the light transmissivity depends on the wavelength. The optical transmissivity depends on how well the high dielectric constant inorganic particles with a perovskite crystal structure (b) are dispersed in the resin, and the desired dispersion level can be achieved by the dispersion technique described before.

The optical transmissivity of a dielectric composition in the entire wavelength range from 400 to 700 nm can be measured using a visible spectrophotometer. In the case where the dielectric composition is a film, a dielectric composition film formed on a substrate made of glass or quartz, namely, a material incapable of absorbing light in the entire wavelength range from 400 to 700 nm can be used as a sample for measuring the optical transmissivity.

It is desirable that the dielectric composition of this invention has a relative dielectric constant of 10 to 300. It is preferred that the relative dielectric constant is 20 or more and 80 or less. It is more preferred that the relative dielectric constant is 30 or more and 50 or less. In the case where the dielectric composition is used as an interlayer insulation film, if the relative dielectric constant is 10 or more, a capacitor with a large capacity can be easily formed. Further, in the case where the relative dielectric constant is 20 or more, since it is not necessary to form an extremely thin interlayer insulation film when a capacitor with a large capacity is formed, pinholes causing the generation of leak current are unlikely to be formed in the interlayer insulation film. In the case where the relative dielectric constant is 30 or more, since the interlayer insulation film can be formed to have a relatively large thickness even when a capacitor with a large capacity is formed, the withstand voltage can be easily made large. The relative dielectric constant of high dielectric constant inorganic particles having a perovskite crystal structure has a positive correlation with the particle diameter in most cases. In the case where the relative dielectric constant of the dielectric composition is 300 or less, since the high dielectric constant inorganic particles having a perovskite crystal structure used is not required to have an extremely large relative dielectric constant, the high dielectric constant inorganic particles having a perovskite crystal structure used can have a relatively small particle diameter, and the optical transmissivity in the wavelength range from 400 to 700 nm can be easily made large. If it is attempted to make the relative dielectric constant of the dielectric composition larger than 80, it is often necessary that the particle packing rate is more than the closest packing corresponding to the case where particles of the same particle diameter are used. Therefore, in the case where the relative dielectric constant of the dielectric composition is 80 or less, it is possible to use high dielectric constant inorganic particles with a very sharp particle diameter distribution close to the case where particles of the same particle diameter are used. In the case where the relative dielectric constant of the dielectric composition is 50 or less, since it is not necessary that the high dielectric constant inorganic particles with a perovskite crystal structure (b) used has an extremely large dielectric constant, the high dielectric constant inorganic particles can be selected from a wider range of materials.

The high dielectric constant inorganic particles having a perovskite crystal structure (b) used in this invention have an average particle diameter of 0.002 $\mu$m to 0.06 $\mu$m. A preferred range is 0.002 $\mu$m to 0.04 $\mu$m. It is more preferred that the average particle diameter of the high dielectric constant inorganic particles having a perovskite crystal structure (b) is 0.005 $\mu$m or more and 0.03 $\mu$m or less. If the average particle diameter is 0.002 $\mu$m or more, the relative dielectric constant of the high dielectric constant inorganic particles having a perovskite crystal structure (b) can be easily made large. If the average particle diameter is 0.005 $\mu$m or more, the high dielectric constant inorganic particles having a perovskite crystal structure (b) is unlikely to cohere to each other and can be easily uniformly dispersed in the resin. In the case where the average particle diameter is 0.04 $\mu$m or less, since the Rayleigh scattering caused by the high dielectric constant inorganic particles having a perovskite crystal structure (b) when light is transmitted through the dielectric composition can be inhibited, the optical transmissivity can be easily made large. If the average particle diameter is 0.03 $\mu$m or less, the effect of inhibiting Rayleigh scattering becomes larger, and the optical transmissivity of the dielectric composition can be easily made larger. In addition, the settling which is likely to take place when the dielectric composition is produced and which causes a partial distribution in the high dielectric constant inorganic particles having a perovskite crystal structure (b) is unlikely to occur.

As one method for producing the dielectric composition of this invention, a flowable material such as a paste in which high dielectric constant inorganic particles having a perovskite crystal structure (b) are dispersed in a non-cured resin liquid or solution is solidified by heating, etc. In this case, since the specific gravity of the high dielectric constant inorganic particles having a perovskite crystal structure (b) is generally larger than that of the resin, the particles are likely to settle by gravity below in the dispersion in a flowable state. However, in the case where the particle diameter is small, since the individual particles are small in weight, the particles are unlikely to settle because of the large effect of Brownian motion.

The Rayleigh scattering intensity of the light progressing in the dielectric composition has positive correlation with the third power of the particle diameter of the high dielectric constant inorganic particles having a perovskite crystal structure (b). So, if the high dielectric constant inorganic particles are narrower in the width of particle diameter distribution or smaller in the content of large particles, the optical transmissivity of the dielectric composition can be easily made larger, even if the average particle diameter of the high dielectric constant inorganic particles remains equal.

Meanwhile, the average particle diameter of the high dielectric constant inorganic particles having a perovskite crystal structure (b) of this invention can be measured by XMA measurement of a very thin section of a cured thin film of the dielectric composition or transmission electron microscope (TEM) observation of the dielectric composition. To obtain the very thin section, a cured thin film of the dielectric composition is cut to have a section in the film thickness direction. Since the high dielectric constant inorganic particles having a perovskite crystal structure (b) and the resin (a) are different from each other in electron beam transmissivity, they can be respectively identified in the TEM observation image due to the difference between the high dielectric constant inorganic particles having a perovskite crystal structure (b) and the resin (a) in contrast. In the case where plural systems of high dielectric constant inorganic particles having a perovskite crystal structure (b) are used, the respective systems of high dielectric constant inorganic particles can be identified by the elementary analysis based on XMA measurement and the crystal structure analysis based on electron beam diffraction image observation. From the image analysis of the TEM observation image, the area distribution of the high dielectric constant inorganic particles having a perovskite crystal structure (b) and the resin (a) is obtained, and the sections of the images of the high dielectric constant inorganic particles having a perovskite crystal structure (b) are approximated by circles, to calculate the particle diameters from the approximate circular areas. For evaluating the diameters, a TEM image with a magnification of 5000x and a TEM image with a magnification of 40000x can be used. The distributions of the calculated diameters are expressed as a histogram of 0.1 $\mu$m steps for the TEM image with a magnification of 5000x, and as a histogram of 0.01 $\mu$m steps for the TEM image with a magnification of 40000x. For each column of the obtained histograms, its central value is multiplied by the frequency, to obtain the product. The sum of the products is divided by the sum of frequencies, to obtain the average particle diameter. The particle diameter distributions can also be evaluated by the same analysis as described above using a scanning electron microscope (SEM) instead of TEM.

In general, the temperature at which high dielectric constant inorganic particles having a perovskite crystal structure (b) grow or change in the shapes of primary particles due to sintering, etc. is in most cases far higher than the curing temperature of the resin (a). In such a case, the particle diameter of the high dielectric constant inorganic particles having a perovskite crystal structure (b) can be evaluated in the stage of raw material before the high dielectric constant inorganic particles having a perovskite crystal structure (b) are dispersed into the resin (a). In this case, the high dielectric constant inorganic particles having a perovskite crystal structure (b) can be directly observed using a TEM or SEM similar to the above, and the observation image obtained can be analyzed to obtain the particle diameter.

Further, in addition to the above, the average particle diameter can also be measured by the dynamic light scattering method for measuring the fluctuations of the scattered light owing to the Brownian motion of high dielectric constant inorganic particles having a perovskite crystal structure (b) in a liquid, or the electrophoretic light scattering method for measuring the Doppler effect of scattered light caused when high dielectric constant inorganic particles having a perovskite crystal structure (b) are subjected to electrophoresis, or ultrasonic attenuation spectroscopy for obtaining the attenuation of irradiated ultrasonic waves, etc. Laser diffraction type or laser scattering type particle diameter distribution measuring instruments include LA-920 produced by HORIBA, Ltd., SALD-1100 produced by Shimadzu Corporation, MICROTRAC-UPA150 produced by NIKKISO Co., Ltd., Zeta Sizer Nano ZS produced by Sysmex Corporation, etc.

It is preferred that the content of the high dielectric constant inorganic particles having a perovskite crystal structure (b) of the dielectric composition of this invention is 30 wt% to 99 wt% based on the total amount of the dielectric composition. If the content of the high dielectric constant inorganic particles having a perovskite crystal structure (b) is 30 wt% or more based on the total amount of the dielectric composition, the relative dielectric constant of the dielectric composition can be easily made large, and when it is used as an interlayer insulation material of a capacitor, a capacitor with a large capacitance can be easily obtained. In the case where the content of the high dielectric constant inorganic particles having a perovskite crystal structure (b) is 99 wt% or less based on the total amount of the dielectric composition, since the resin content is sufficiently large, the film is likely to have a high strength.

The resin (a) used in this invention can be either a thermoplastic resin or a thermosetting resin. To obtain a dielectric composition with an optical transmissivity of 50% or more in the entire wavelength range from 400 to 700 nm, it is preferred to use a resin (a) with an optical transmissivity of 50% or more. It is preferred that the resin (a) has a larger optical transmissivity, since the optical transmissivity of the dielectric composition can be easily made larger.

Examples of the thermoplastic resin used in this invention include polyphenylene ether, polyphenylene sulfide, polyether sulfone, polyether imide, liquid crystal polymer, polystyrene, polyethylene, fluorine resin, etc.

Further, examples of the thermosetting resin used in this invention include an epoxy resin, phenol resin, siloxane resin, polyimide resin, acrylic resin, cyanate resin, benzocyclobutene resin, etc. In view of high heat resistance, etc., it is preferred to use a thermosetting resin. In view of the dispersibility of the high dielectric constant inorganic particles having a perovskite crystal structure (b), etc., an epoxy resin can be preferably used.

An epoxy resin refers to a resin having a prepolymer with a molecular structure containing two or more epoxy groups (oxirane rings). Further, the paste composition of this invention may contain a curing agent. As the curing agent, for example, a curing agent used for epoxy resins in general can be added. Examples of the curing agent include amine-based curing agents, acid anhydride-based curing agents, phenol-based curing agents, etc. Furthermore, two or more of the curing agents can also be used together. Moreover, together with a curing agent, a curing accelerator can also be used. A curing accelerator can also be added alone to a resin without adding a curing agent. Examples of the curing accelerator include metal chelate compounds such as 2-methylimidazole, 2-ethyl-4-methylimidazole, 1-cyanoethyl-2-phenylimidazole, 1-cyanoethyl-2-phenylimidazolium trimellitate, triphenylphosphine and tris(2,4-pentadionato)cobalt.

In this invention, an acrylic resin can also be preferably used as the resin (a), since it has high transmissivity for light with a wavelength of 400 to 700 nm.

The high dielectric constant inorganic particles having a perovskite crystal structure (b) mean high dielectric constant inorganic particles having a perovskite crystal structure or a complex perovskite crystal structure. Examples of them include barium titanate system, barium titanate zirconate system, strontium titanate system, calcium titanate system, bismuth titanate system, magnesium titanate system, barium neodymium titanate system, barium tin titanate system, barium magnesium niobate system, barium magnesium tantalate system, lead titanate system, lead zirconate system, lead titanate zirconate system, lead niobate system, lead magnesium niobate system, lead nickel niobate system, lead tungstate system, calcium tungstate system, lead magnesium tungstate system, titanium dioxide system, etc. The barium titanate system is a general term of barium titanate crystal structure in which an element is substituted by another element or in which another element invades, including a solid solution with barium titanate as the base material. This applies also to barium titanate zirconate system, strontium titanate system, calcium titanate system, bismuth titanate system, magnesium titanate system, barium neodymium titanate system, barium tin titanate system, barium magnetic niobate system, barium magnesium tantalate system, lead titanate system, lead zirconate system, lead titanate zirconate system, lead niobate system, lead magnesium niobate system, lead nickel niobate system, lead tungstate system, calcium tungstate, and lead magnesium tungstate system, and each of the systems is a general term including a solid solution with the compound concerned as the base material.

As the high dielectric constant inorganic particles having a perovskite crystal structure or a complex perovskite crystal structure, any one of the respective systems can be used alone, or two or more of them can also be used as a mixture. In the case where a dielectric composition with a large dielectric constant is obtained, it is preferred to use a compound mainly consisting of barium titanate, if commercial convenience is also taken into account. For the purposes of enhancing the dielectric property or temperature stability, a small amount of a shifter or depressor, etc. can also be added.

As the high dielectric constant inorganic particles having a perovskite crystal structure (b), it is preferred to use inorganic particles with a relative dielectric constant of 50 to 30000. If high dielectric constant inorganic particles with a relative dielectric constant of 50 or more are used, a dielectric composition with a sufficiently large relative dielectric constant is likely to be obtained. If the relative dielectric constant of the high dielectric constant inorganic particles is 30000 or less, the dependency of the relative dielectric constant of the dielectric composition on temperature can be easily made small. The relative dielectric constant of high dielectric constant inorganic particles having a perovskite crystal structure (b) in this specification refers to the relative dielectric constant of the sintered compact obtained by heating and burning the raw powder of the high dielectric constant inorganic particles having a perovskite crystal structure (b). The relative dielectric constant of a sintered compact is measured, for example, according to the following procedure. High dielectric constant inorganic particles, a binder resin such as polyvinyl alcohol and an organic solvent or water are mixed to prepare a paste composition, and the paste composition is packed into a pellet molding device. The molded pellet is dried to obtain a solid pellet. The solid pellet is burned, for example, at about 900 to about 1200°C, to decompose and remove the binder resin and to sinter the high dielectric constant inorganic particles having a perovskite crystal structure (b), for obtaining a sintered compact consisting of an inorganic component only. In this case, it is necessary that the voids of the sintered compact are sufficiently small, and that the void percentage calculated from the theoretical density and the measured density is 1% or less. Top and bottom electrodes are formed on the sintered pellet, and the capacitance and size of it are measured. From the measured results, the relative dielectric constant is calculated.

The methods for preparing high dielectric constant inorganic particles having a perovskite crystal structure (b) include a solid phase reaction method, hydrothermal synthesis method, supercritical hydrothermal synthesis method, sol-gel method, oxalate method, alkoxide method, etc. Any one of hydrothermal synthesis method, supercritical hydrothermal synthesis method and sol-gel method is preferred, since the high dielectric constant inorganic particles having a perovskite crystal structure (b) can be easily produced.

The shape of the high dielectric constant inorganic particles having a perovskite crystal structure (b) can be spheres, virtual spheres, elliptic spheres, needles, sheets, scales, rods, cubes, etc. Especially spheres and virtual spheres are preferred. The reason is that since spherical or virtually spherical high dielectric constant inorganic particles having a perovskite crystal structure (b) are small in specific surface area, the cohesion of high dielectric constant inorganic particles and the decline of resin flowability are unlikely to occur. Any one of the shapes can be used or two or more of them can also be used as a mixture.

The method for producing the paste composition of this invention is not especially limited, but the following method can be more preferably used. Since the high dielectric constant inorganic particles having a perovskite crystal structure (b) used in this invention are small in the average particle diameter, a dispersion method using fine beads as a dispersion medium is effective for loosening the aggregates of particles, to achieve uniform dispersion. Since the average particle diameter of the high dielectric constant inorganic particles having a perovskite crystal structure (b) is 0.002 μm to 0.06 μm, it is effective to use beads with an average particle diameter of 0.02 mm to 0.1 mm as the dispersion medium. Beads with an average particle diameter of 0.03 mm or more and 0.06 mm or less as the dispersion medium are more effective. In the case where the average particle diameter of the beads is 0.1 mm or less, when the dispersion passes through among the beads, the high dielectric constant inorganic particles contact the beads highly frequently and a sufficient dispersion effect can be obtained. For obtaining a further higher dispersion effect, beads with an average particle diameter of 0.06 mm or less are preferred. In the case where the average particle diameter of the beads is 0.02 mm or more, the momentum of the individual beads is sufficiently large, and sufficient shearing stresses can be obtained for loosening the aggregates of high dielectric constant inorganic particles. For giving further stronger shearing stresses to the aggregate of the high dielectric constant inorganic particles, beads with an average particle diameter of 0.03 mm or more are preferred.

The average particle diameter of beads can be evaluated, for example, according to the following method. The beads can be observed using an optical microscope. Beads (sample) are placed on a transparent sheet such as a glass sheet, and light is applied from the underside of the transparent sheet. The image of the transmitting light is observed through an objective lens, to evaluate the particle diameters of the beads. Arbitrary 100 beads are observed, and the mean value of the particle diameters obtained from the respective beads can be employed as the average particle diameter of the beads. The particle diameters of the beads can be obtained by approximating the respective observation images of beads as spheres using any of various image processing software products. Particularly a CCD camera attached instead of an ocular lens to the microscope is used to obtain a digital image, and the image is processed on a computer. The CCD camera can be, for example, ADP-240 produced by Flovel Co., Ltd., and the software used for image processing can be, for example, FlvFs produced by Flovel Co. , Ltd.

As the beads used as the dispersion medium, metallic beads, ceramic beads, or glass beads can preferably used. Particular examples of the material of the beads include stainless steel, iron, copper, chromium, nickel, titania, silicon nitride, silicon carbide, alumina, zirconia, zirconium silicate, barium titanate, silicate glass, quartz, etc. Especially beads made of zirconia can be suitably used, since zirconia has high hardness. As zirconia, it is preferred to use yttria-stabilized zirconia, since it has large strength.

The dispersion method using the beads in this invention is not especially limited, and examples of the apparatus used to perform dispersion include a ball mill, homogenizer, pin rotor beads mill, etc. "Ultra Apex Mill" (trade name) produced by Kotobuki Industries Co., Ltd. and "Star Mill" (trade name) produced by Ashizawa Fineteck Ltd. are especially suitable for dispersing submicron particles. In these two beads mills, the vessel used to disperse high dielectric constant inorganic particles consists of a cylindrical stator forming the outer wall and a rotor rotating at the center of the stator. A dispersion obtained by mixing high dielectric constant inorganic particles and an organic solvent is fed into the space between the stator and the rotor. From the rotor, plural blades are projected radially. The vessel is packed with beads as a dispersion medium, and if the rotor is rotated, the blades stir the beads, and accordingly, the beads give shearing stresses to the high dielectric constant inorganic particles in the dispersion, for dispersing the high dielectric constant inorganic particles into submicron particles. The dispersion once passing through the vessel is circulated to be repetitively fed into the vessel, for gradually loosening the aggregates of high dielectric constant inorganic particles in the dispersion, to promote dispersion.

The high dielectric constant inorganic particles contained in the dispersion exist as primary particles or aggregates. The size of the high dielectric constant inorganic particles existing in the dispersion in this invention is the median size (50% particle diameter) of the aggregates respectively consisting of several primary particles of the high dielectric constant inorganic particles distributed in terms of volume in the dispersion. The method for measuring the average particle diameter of high dielectric constant inorganic particles in the dispersion can be of either static light scattering method or dynamic light scattering method respectively by laser. In the case where the particle diameter of the particles with an average particle diameter of 20 nm or less is highly accurately evaluated, it is preferred to use the dynamic scattering method. The particle diameter measuring instrument of this method can be, for example, "NANOTRAC" UPA-EX150 (trade name) produced by NIKKISO Co., Ltd.

It is preferred that the amount of the beads packed in the vessel of a beads mill is 20 vol% or more and 85 vol% or less of the vessel volume. In the case where the packed amount of beads is 20 vol% or more, since the clearances between nearby beads are narrow, the high dielectric constant inorganic particles in the dispersion contact the beads highly frequently, and the dispersion can progress very efficiently in a short time. Further to enhance the effect, it is more preferred that the packed amount of beads is 50 vol% or more. On the other hand, in the case where the packed amount of beads is 85 vol% or less, since there are sufficient clearances between nearby beads, the dispersion can be fed smoothly without clogging the vessel. Further in the case where the packed amount of beads is 85 vol% or less, since the heat quantity generated between beads or between beads and the stator and the rotor of the vessel is small, the materials constituting the dispersion such as a dispersant are unlikely to be deteriorated. In a beads mill in which beads are filtered by centrifugal force, if the packed amount of beads is large, the filtering function does not work sufficiently, and beads are highly likely to be mixed in the dispersion recovered from the vessel. However, in the case where the packed amount of beads is 85 vol% or less, no beads or very few beads are mixed in the recovered dispersion. Further to exhibit this effect more significantly, it is more preferred that the packed amount of beads is 75 vol% or less.

It is preferred that the circumferential speed of the rotating rotor of a beads mill is 8 m/s to 15 m/s. The circumferential speed of rotation in this invention refers to the speed at the tips of the rotating blades projected from the rotor. If the circumferential speed of rotation is 8 m/s or more, sufficient shearing stresses can be obtained for dispersing the high dielectric constant inorganic particles into an average particle diameter of 0.02 $\mu$m or less. Further, if the circumferential speed of rotation is 8 m/s or more, in a beads mill in which beads are filtered by centrifugal force, no beads are mixed in the recovered dispersion. On the other hand, in the case where the circumferential speed of rotation is 15 m/s or less, since the heating value caused by the friction between beads and between beads and the stator and the rotor of the vessel is small, the dispersion is unlikely to be deteriorated.

It is preferred that the temperature of the dispersion during dispersion treatment is 10°C to 40°C. In this specification, the temperature of the dispersion during dispersion treatment refers to the temperature of the dispersion as delivered from the vessel. If the temperature of the dispersion is 40°C or lower, the amount of the organic solvent volatilized from the dispersion is small, and the concentrations of components such as the high dielectric constant inorganic particles and the dispersant in the dispersion little change. If the dispersion temperature is higher than 40°C, the concentrations of the components in the dispersion may change to lower the dispersibility of the dispersion. For example, the dispersibility of the dispersion may be affected by pH, and the pH value of the dispersion is changed by the change in the concentrations of the components in the dispersion. Therefore, the temperature control of the dispersion is one of important conditions for controlling the pH value of the dispersion and for controlling the dispersibility of the high dielectric constant inorganic particles in the dispersion. Further in the case where the dispersion contains a material capable of chemically reacting depending on the temperature or a material likely to be deteriorated depending on the temperature, it is preferred to control the temperature during dispersion, since any temperature change can result in the change of the properties of the dispersion. To enhance this effect further, it is preferred that the temperature of the dispersion is 35°C or lower. On the other hand, in the case where the temperature of the dispersion during dispersion treatment is lower than 10°C, dew condensation may be caused in the container used for recovering the dispersion delivered from the vessel, and water may be mixed in the dispersion, to deteriorate the properties of the dispersion. So, it is preferred that the temperature of the dispersion during dispersion treatment is higher than 10°C. Further, in the case where the temperature of the dispersion is higher than 10°C, since the viscosity of the dispersion declines, the loss of kinetic energy of beads can be voided to enhance the dispersion efficiency. For further enhancing this effect, it is more preferred that the temperature of the dispersion is higher than 20°C.

It is preferred that the viscosity of the dispersion during dispersion treatment is 1 mP·s to 100 mP·s. In this specification, the viscosity of the dispersion during dispersion treatment refers to the viscosity of the sample of the dispersion delivered from the vessel, measured 5 minutes after sampling. The measuring temperature is 25°C. The viscosity can be measured using, for example, viscometer RE-115L produced by Toki Sangyo Co. , Ltd. The beads in the vessel of a beads mill acquire kinetic energy from the blades of the rotating rotor and contact the high dielectric constant inorganic particles in the dispersion, to generate shearing stresses. However, in the case where the viscosity of the dispersion is high, the kinetic energy may be greatly lost in the solvent before the beads contact the high dielectric constant inorganic particles, and sufficient shearing stresses may not be able to be given to the high dielectric constant inorganic particles as the case may be. In the case where the viscosity of the dispersion during dispersion treatment is 100 mP·s or less, the above-mentioned problem can be avoided. To further enhance the effect, it is more preferred that the viscosity of the dispersion during dispersion treatment is 20 mP·S or less. On the other hand, if the viscosity of the dispersion is 1 mP·s or more, the viscosity of the paste composition prepared by mixing the produced dispersion and the resin does not decline, and in the case where the paste composition is applied to a substrate, to produce a resin composition film, a continuous film can be easily formed.

An example of the method for producing the dispersion of inorganic particles in this invention is described below.

High dielectric constant inorganic particles having a perovskite crystal structure (b), a dispersant and an organic solvent (c) are mixed and stirred at a predetermined ratio. Immediately after completion of mixing, since an air layer covers the surfaces of the high dielectric constant inorganic particles, the high dielectric constant inorganic particles may not be sufficiently wetted with the organic solvent, and the viscosity may increase. In this case, it is preferred to stir by rotary blades, etc., taking sufficient time, till the high dielectric constant inorganic particles are perfectly wetted with the organic solvent.

After the high dielectric constant inorganic particles, dispersant and organic solvent have been mixed and stirred, a beads mill is used for dispersion treatment of the high dielectric constant inorganic particles. At first, a predetermined amount of beads with a predetermined particle diameter is supplied into the vessel of the beads mill, and the rotor is rotated while the same organic solvent as that used in the dispersion is fed and circulated through the vessel, for washing the beads. During washing, if the organic solvent is visibly dirty, it should be replaced by a new organic solvent, and washing is continued till the organic solvent does not become visibly dirty any more. After the beads have been washed, the circulated organic solvent is recovered, and then a mixture consisting of the high dielectric constant inorganic particles, dispersant and organic solvent is fed and circulated through the vessel, for performing dispersion treatment. Since the dispersion delivered from the vessel in the beginning is thinner in concentration owing to the organic solvent remaining in the vessel. So, considering the size of the vessel, the initial flow is removed till the concentration of the dispersion delivered from the vessel becomes constant. The dispersion treatment can be carried out at a time using small beads, or the size of the beads can be changed stepwise. The operation method selected here is not especially limited. For example, beads with a particle diameter of 0. 5 mm can be used to disperse till the average particle diameter of the high dielectric constant inorganic particles becomes about 100 nm, and then finer beads can be used for performing further dispersion. In this case, the dispersion treatment performed till the average particle diameter becomes about 0.1 μm is called coarse dispersion, and the dispersion treatment to achieve a finer particle diameter of 0.06 μm or less is called regular dispersion. Different apparatuses can be used for coarse dispersion and regular dispersion, for example, a homogenizer for coarse dispersion and a beads mill for regular dispersion. In many of beads mills, a sample is fed through a tube to the mill proper, and if a beads mill is used for coarse dispersion, particles with a large particle diameter may clog the feed tube. If a homogenizer or any other apparatus is used for coarse dispersion, the clogging can be avoided.

In the case where a homogenizer is used for coarse dispersion, the circumferential speed at the tips of rotating blades is set, for example, at 1 to 10 m/s for performing treatment for about 1 hour. It is preferred to perform the treatment by the homogenizer in an ice bath, since heat is generated during the treatment. For example, "Excel Auto" (trade name) (produced by NISSEI Corp.) can be used as the homogenizer.

Since the viscosity of the dispersion during dispersion treatment affects the dispersibility of high dielectric constant inorganic particles and the efficiency of dispersion treatment, it is preferred to identify the viscosity of the dispersion changing with the lapse of dispersion treatment time. For example, if the dispersion is sampled at every certain period of time for viscosity measurement, the viscosity changing with the lapse of time can be identified. In the case where the viscosity of the dispersion during dispersion treatment increases, an appropriate amount of an organic solvent, dispersant or pH regulator, etc. can be added into the circulated dispersion, to lower the viscosity.

The temperature of the dispersion during dispersion treatment can be controlled by adjusting the temperature and flow rate of the cooling water used for cooling the outside of the vessel and the circulation speed of the dispersion. The temperature rise of the dispersion is likely to occur when the viscosity of the dispersion during dispersion treatment is high. If the temperature rise of the dispersion is too large, the dispersion may be deteriorated.

It is preferred that the solid concentration of the dispersion is 10 wt% or more. More preferred is 20 wt% or more. Further, it is preferred that the solid concentration of the dispersion is 60 wt% or less. More preferred is 40 wt% or less. The solid concentration of the dispersion in this invention means the rate of the ingredients other than the organic solvent contained in the dispersion based on the total amount of the dispersion. If the solid concentration of the dispersion is 10 wt% or more, a dispersion with a low viscosity can be prepared, and since the heat quantity generated, for example, by the friction with beads is small also during dispersion treatment, the materials constituting the dispersion are unlikely to be deteriorated. In the case where the solid concentration of the dispersion is 20 wt% or more, when the paste composition obtained by mixing a dispersion and a resin liquid is used to form a film of a dielectric composition, a thick film of 1 μm or more can be easily formed. Further, in the case where the solid concentration of the dispersion is 60 wt% or less, when a beads mill in which beads are filtered by centrifugal separation is used, the beads can be easily separated. Furthermore, if the solid concentration of the dispersion is 40 wt% or less, the viscosity of the dispersion is low, and the high dielectric constant inorganic particles in the dispersion can frequently contact the beads. So, the aggregates of high dielectric constant inorganic particles can be easily loosened. Moreover, even in the case where high dielectric constant inorganic particles with an average particle diameter of 0.1 μm or less are used, the high dielectric constant inorganic particles in the dispersion can be efficiently dispersed near to the primary particle diameter in the particle diameter distribution, and when this dispersion is used to form a film of a dielectric composition, a film with a high transmissivity can be easily formed.

The circumferential speed of the rotating rotor of the beads mill can be kept constant or can also be changed stepwise during dispersion treatment. The circumferential speed of the rotating rotor may affect the temperature of the dispersion during dispersion treatment as the case may be. So, when the circumferential speed of rotation is changed during dispersion treatment, it is preferred not to raise the temperature of the dispersion too much. Further, in the case of a beads mill in which beads are filtered by centrifugal separation, if a feed pump is actuated to start the circulation of the dispersion before the rotor is rotated, the beads may be mixed in the dispersion delivered from the vessel. So, the liquid feed pump should be actuated after the rotor is rotated.

The dispersion treatment time is appropriately set in reference to the materials and the composition ratio of the components of the dispersion such as the high dielectric constant inorganic particles, organic solvent and dispersant. For example, it is preferred to sample the dispersion at certain time intervals and to measure the average particle diameter of the high dielectric constant inorganic particles in the dispersion, for such reasons that the state of dispersion changing with the lapse of time can be identified and that the termination time point of dispersion treatment can be judged. In the case of a composition with good dispersibility, dispersion treatment of about 30 minutes is sufficient, but the dispersion treatment can also be performed for more than 24 hours depending on the composition. In the case where the dispersion treatment time is long, the material as a component of the dispersion such as the organic solvent may be volatilized to change the composition ratio of the dispersion, thus changing the dispersibility. In such a case, the necessary component should be added as required to adjust the composition.

Below is explained a method for producing a paste composition containing the high dielectric constant inorganic particle dispersion obtained by the above-mentioned production method and a resin or a resin solution consisting of a resin and an organic solvent.

For mixing the dispersion with a resin or a resin solution containing a resin and an organic solvent, the dispersion can be injected into the resin or the resin solution containing a resin and an organic solvent till a predetermined amount is reached, or the resin or the resin solution containing a resin and an organic solvent can also be injected into the dispersion till a predetermined amount is reached. In this case, the resin can be a liquid resin or a resin solution obtained by dissolving a solid resin into a solvent. Further, the resin solution containing a resin and an organic solvent can also be a resin solution in which a resin solution obtained by dissolving a liquid resin or a solid resin into a solvent is further diluted by an organic solvent.

The method for producing a paste composition can be a method of mixing the dispersion and the resin respectively separately prepared or mixing the dispersion and the resin solution containing a resin and an organic solvent respectively separately prepared, as described above. However, a method of directly dispersing high dielectric constant inorganic particles into a liquid resin or a resin solution can also be used. Also in the case where high dielectric constant inorganic particles are directly dispersed into a liquid resin or a resin solution, a beads mill can be preferably used.

For further homogenizing the paste composition obtained by mixing predetermined amounts of the dispersion containing high dielectric constant inorganic particles and the resin material, a ball mill or roll mill can be used. Further, in the case where bubbles are mixed in the paste composition by mixing treatment, if the bubbles are removed by allowing the paste composition to stand or using a stirring defoaming machine or the like, the ingress of bubbles into the resin composition produced by using the paste composition can be inhibited.

As one method for obtaining the dielectric composition of this invention, for example, as described above, at first a paste composition having high dielectric constant inorganic particles dispersed in a liquid resin or a resin solution is prepared and applied to a substrate or the like, and being get rid of the organic solvent, it is solidified to obtain a dielectric composition. In this case, the solidification can be achieved by heat, light or the like. However, in the case where heat is used for solidification, it is preferred to heat at lower than the heat resistance temperature of the material to be coated, electronic parts, etc. which are heated together with the paste composition, to ensure that no resin is decomposed or removed, since the dielectric composition of this invention is not a sintered compact. It is preferred that the heating temperature is, for example, lower than 500°C. It is more preferred to heat at a temperature of lower than 250°C. The material to be coated is not limited to a rigid substrate such as a glass substrate or glass epoxy substrate, and can also be a flexible substrate such as a resin film, metallic foil of copper, etc.

It is preferred that the void percentage of the dielectric composition of this invention is 30 vol% or less. More preferred is 20 vol% or less, and further more preferred is 10 vol% or less. If the void percentage is 30 vol% or less, the Rayleigh scattering caused by voids can be kept small, and the transmissivity can be easily made large. If the void percentage is 20 vol% or less, insulation resistance can be easily made large. If the void percentage is 10 vol% or less, leak current can be easily made small.

The void percentage can be kept at 30 vol% or less, for example, by appropriately selecting the resin, high dielectric constant inorganic particles and organic solvent from those enumerated before. Particularly the void percentage can be achieved by letting the paste composition contain at least one organic solvent with a boiling point of 160°C or higher.

The method for measuring the void percentage of the dielectric composition can be adequately selected to suit each application from gas adsorption method, mercury penetration method, positron annihilation method, small angle X-ray scattering method, etc.

The form of the dielectric composition obtained from the paste composition of this invention is not especially limited and can be selected to suit each application from film, rod, sphere, etc. Especially a film is preferred. The film in this specification can be a film, sheet, plate, pellet, etc. Of course, a pattern suitable for each application can also be formed to provide the via holes for conduction, to adjust the impedance, capacitance or internal stress, or to provide the function of heat radiation, etc.

The transparent electrode used in this invention is only required to have an optical transmissivity of 50% to 100% in the entire wavelength range from 400 to 700 nm, and is not especially limited in material. Examples of the material include indium-tin oxide (ITO), indium-zinc oxide, tin oxide, indium oxide, zinc oxide and these materials doped with another element, etc., since they are high in optical transmissivity. It is not preferred that the transparent electrode has an optical transmissivity of less than 50%, since the transparency is insufficient for capacitors used for displays, etc., not allowing sufficient information display properties to be obtained.

A capacitor having the interlayer insulation film obtained from the dielectric composition of this invention and a transparent electrode with an optical transmissivity of 50% to 100% in the entire wavelength range from 400 to 700 nm allows information to be displayed using the light passing though the transparent capacitor, since it has a high optical transmissivity in a wavelength range from 400 to 700 nm.

The capacitor of this invention has at least an interlayer insulation film and a transparent electrode, and the interlayer insulation film exists between electrodes. In this invention, it is required that at least one of the two electrodes is transparent, and the other electrode can also be an opaque electrode made of a metal, etc.

If the dielectric composition of this invention is a film, the film thickness can be arbitrarily decided to such an extent that the capacitance and the optical transmissivity of the capacitor containing the dielectric composition as the interlayer insulation film satisfy desired values. It is preferred that the film thickness is 0.05 $\mu$m or more and 20 $\mu$m or less. More preferred are 0.1 $\mu$m or more and 5 $\mu$m or less. For securing a large capacitance as a capacitor, a smaller film thickness is preferred. If the film thickness is 0.05 $\mu$m or more, pinholes are unlikely to be formed, and electric insulation can be easily obtained. Further, if it is 0.1 $\mu$m or more, the dielectric loss tangent is unlikely to increase after completion of PCT (pressure cooker test) as an accelerated durability test. Further, if the film thickness is 20 $\mu$m or less, a sufficiently large capacitance as a capacitor can be easily obtained. If the film thickness is 5 $\mu$m or less, a sufficiently high optical transmissivity can be easily obtained.

It is preferred in view of circuit design that the capacitance of the capacitor using the dielectric composition as an interlayer insulation film is small in temperature dependent change and in-plane variation. It is preferred that the temperature dependent change is as small as possible. For example, it is preferred that the capacitance satisfies the X7R characteristics (the temperature dependent change rate of capacitance in a range from -55 to 125°C is within $\pm$15%). It is preferred that the in-plane variation of capacitance is 5% or less of the mean value (Mean value of capacitance - 5% $\leq$ Capacitance $\leq$ Mean value of capacitance + 5%).

The dielectric composition of this invention can also be used for other than the interlayer insulation material kept between electrodes for a capacitor. For example, it can be used as a material in contact with the electrolyte of electrowetting type electronic paper. In this case, the dielectric composition film of this invention is formed in such a manner that the surface opposite to the surface in contact with the electrolyte contacts an electrode. Since a transparent high dielectric constant layer is formed on the surface in contact with the electrolyte, the change in the wettability with the electrolyte by voltage application becomes large and the electrolyte migration velocity becomes large. Thus, electrowetting type electronic paper with a high display speed can be realized.

In an application where the dielectric composition of this invention is used in contact with a liquid material such as an electrolyte as in the case where it is used in electrowetting type electronic paper, it is preferred that the dielectric composition is not impregnated with the liquid material. For inhibiting the impregnation, it is preferred to use a resin little capable of absorbing moisture and water as the resin (a). Low water absorbable epoxy resins include xylylene novolak type, biphenyl novolak type, dicyclopentadiene type, dicyclopentadiene phenol novolak type, diphenylmethane type, naphthol aralkyl type, naphthol novolak type, tetra-functional naphthalene type, epoxy resins having naphthalene skeletons or bisphenyl skeletons, etc. Low water absorbable curing agents include, for example, phenol-based novolak resins, etc.

The paste composition of this invention may contain, as required, additives such as a stabilizer, dispersant, precipitation dispersant, plasticizer, antioxidant, crosslinking agent, crosslinking accelerator, dissolution inhibitor, dissolution regulator, surfactant, surface modifier and defoaming agent. Further, for inhibiting the impregnation of a liquid material into the dielectric composition as described above, it is preferred that the paste composition contains additives such as a plasticizer, crosslinking agent, surfactant, surface modifier and defoaming agent. Examples of more preferred additives include a fluorine-based surfactant and a fluorine-based surface modifier. Examples of the fluorine-based surfactant include "Megafac" (trade name) F-493, F-494, F-470, F-475, F-477, F-478, F-482, F-487 and F-172D and "Defenser" (trade name) MCF-350SF respectively produced by Dainippon Ink and Chemicals, Incorporated, "Novec" (trade name) FC-4430 produced by Sumitomo 3M limited, etc.

Further, as a method for inhibiting the impregnation of a liquid material into the dielectric composition, in addition to letting the paste composition contain the aforesaid additives, the dielectric composition film can also be coated on the surface with a fluorine-based surfactant, fluorine-based surface modifier or fluorine-based coating material, etc. to form a 1 $\mu$m or thinner transparent film on the dielectric composition film. It is preferred that the thickness of the transparent film is 0.5 $\mu$m or less. More preferred is 0.2 $\mu$m or less. Since the relative dielectric constant of the transparent film is lower than that of the dielectric composition, it is preferred that the transparent film is thinner, for securing a large capacitance as a capacitor. If the thickness of the transparent film is 0.2 $\mu$m or less, a sufficiently large capacitance can be easily obtained as a capacitor. If the thickness of the transparent film is 0.5 $\mu$m or less, a sufficiently high optical transmissivity can be easily obtained.

[Examples]

Examples of this invention are explained below, but this invention is not limited thereto or thereby. The optical transmissivity, dielectric properties, film thickness, average particle diameter of high dielectric constant inorganic particles, particle diameter distribution of each dispersion, leak current and voltage holding ratio ere measured according to the following methods.

(1) Optical transmissivity

A microspectroscope, MCPD-2000 (produced by Otsuka Electronics Co., Ltd.) was used to measure (A) the optical transmissivity of a glass substrate in a wavelength range from 400 to 700 nm and (B) the optical transmissivity of a sample obtained by forming a dielectric composition on the glass substrate in a wavelength range from 400 to 700 nm. The optical transmissivity of the dielectric composition of this invention was the differential spectrum obtained by subtracting the optical transmissivity of (A) from the optical transmissivity of (B). As the glass substrate, soda lime glass was used. In the transmitting light spectrum of the dielectric composition of this invention, the value at a wavelength of 400 nm was used as the typical value for the optical transmissivity in each example of this invention. Some examples respectively show the smallest value at other than the wavelength of 400 nm in a wavelength range from 400 to 700 nm, together with the wavelength at which the smallest value was obtained.

(2) Dielectric properties

The capacitance of a dielectric composition was measured using Impedance Analyzer 4294A and Sample Holder 16451B (respectively produced by Agilent Technologies, Inc.).

In Examples 1 to 42 and Comparative Examples 1 to 5, a capacitance measuring sample was prepared as described below, and the relative dielectric constant values at frequencies of 1 kH and 1 MHz were obtained. An aluminum substrate with an area of 6 cm x 6 cm and a thickness of 0.3 mm was entirely coated with a dielectric composition to form a coating film. The coating film was formed by adequately heating a spin-coated paste composition, to evaporate the organic solvent and to cure the resin. In succession, on the coating film, aluminum electrodes were formed by a vapor deposition method. The aluminum electrodes were a measuring electrode with a circular pattern having a diameter of 10 mm and a guard electrode with an annular pattern having an inner diameter of 11.5 mm. The thickness of the dielectric composition film was kept in a range from 10 $\mu$m to 20 $\mu$m. The portion held between the measuring electrode and the aluminum substrate is the region to be measured. The relative dielectric constant was calculated from the capacitance and the dimensions of the region to be measured.

In Examples 43 to 68 and Comparative Examples 6 to 8, a capacitance measuring sample was prepared as described below, and the relative dielectric constant at a frequency of 1 kH was obtained. A glass substrate with a transparent electrode was coated with a dielectric composition, to form a coating film. The coating film was formed by adequately heating a spin-coated paste composition, to evaporate the organic solvent and to cure the resin. In succession, on the coating film, aluminum electrodes were formed by a vapor deposition method. The glass substrate had an area of 6 cm x 6 cm and a thickness of 0.7 mm. The transparent electrode was an ITO (indium tin oxide) electrode. The ITO electrode used had a film thickness of 150 $\pm$ 10 nm, a resistance value of 8 to 20 $\Omega$/square and a transmissivity of $\geq$85% (measuring wavelength 550 nm) . The resistance value of the ITO electrode was measured using a four-terminal tester. The aluminum electrodes were a measuring electrode with a circular pattern having a diameter of 10 mm and a guard electrode with an annular pattern having an inner diameter of 11.5 mm. The thickness of the dielectric composition film was 1 $\mu$m in other examples than Example 68 and 1.1 $\mu$m in Example 68. The portion held between the measuring electrode and the ITO electrode is the region to be measured.

(3) Film thickness

As the thickness of the coating film, the level difference between the coating film and the substrate was by a tracer method measured using Surfcom 1400 (produced by Tokyo Seimitsu Co., Ltd.).

(4) Average particle diameter of high dielectric constant inorganic particles

The average particle diameter of high dielectric constant inorganic particles was obtained by the following method. High dielectric constant inorganic particles were dissolved into an organic solvent, to loosen the aggregates of particles, and the dispersion was added dropwise onto a mesh for TEM observation. After the organic solvent was evaporated, the dispersion on the mesh was observed with a transmission electron microscope (TEM). The observation with a transmission electron microscope (TEM) was performed at magnifications of 100000x and 200000x. The obtained TEM photographs showing high dielectric constant inorganic particles were analyzed using image analysis software (Scion Image produced by Scion Corporation), to obtain the areas of the images of respective high dielectric constant inorganic particles. The respective inorganic filler images obtained like this were approximated by circles, and from the areas of the circles, particle diameters were calculated. For calculating the particle diameters, a TEM photograph showing more than 100 particles was used, and all the high dielectric constant inorganic particles in the photograph were measured. The particle diameters were averaged to be employed as an average particle diameter.

(5) Particle diameter distribution of high dielectric constant inorganic particles in a dispersion

The particle diameter distribution of a dispersion was measured using a particle diameter distribution measuring instrument, MICROTRAC UPA150 (produced by NIKKISO Co., Ltd.). For the particle diameter distribution, values of 50% size and 90% size were used. As for the 50% size, when a cumulative curve was drawn with the total volume of a set of powder particles as 100%, the cumulative median particle diameter at which the cumulative curve intersects the 50% line is the 50% size. The particle diameter at which the cumulative curve intersects the 90% line is the 90% size.

(6) Leak current

The leak current of a dielectric composition was measured as described below. A dielectric composition was formed on a glass substrate with a transparent electrode. The glass substrate had an area of 6 cm x 6 cm and a thickness of 0. 7 mm, and the transparent electrode was an ITO (indium tin oxide) electrode. The ITO electrode used had a film thickness of 150 $\pm$ 10 nm, a resistance value of 8 to 20 $\Omega$/square and a transmissivity of $\geq$ 85% (measuring wavelength 550 nm). The resistance value of the ITO electrode was measured using a four-terminal tester. The glass substrate with the ITO transparent electrode was coated with a dielectric composition to form a coating film, and on the coating film, an aluminum electrode was formed by a vapor deposition method. The aluminum electrode had a circular pattern with a thickness of 300 nm and a diameter of 2.5 mm. The portion held between the transparent electrode and the aluminum electrode was to be measured. A voltage of 2 V was applied between the transparent electrode and the aluminum electrode, and after the voltage was applied for 20 seconds, the current was measured using Electrometer/High Resistance System 6517A produced by Keithley Instruments Inc.

(7) Voltage holding ratio

As described for the above (6), a glass substrate with a transparent electrode was coated with a dielectric composition, to form a coating film. The glass substrate with a transparent electrode was the same as that of the above (6).
Onto the dielectric composition film, 1 mM concentration potassium chloride aqueous solution was added dropwise, and a top electrode was disposed through the potassium chloride aqueous solution, to form a sandwich structure consisting of top electrode/potassium chloride aqueous solution/dielectric composition/ITO transparent electrode. The drops of the potassium chloride aqueous solution were adjusted to ensure that the potassium chloride aqueous solution could occupy an area of 3 mm$^2$ with a thickness of 0.7 mm in the formed sandwich structure. The region to be measured was the portion with an area of 3 mm$^2$ in contact with the potassium chloride aqueous solution, held between the top and bottom electrodes. A rectangular voltage pulse with a potential difference of 5 V and a width of 60 $\mu$s was applied between the top electrode and the ITO transparent electrode. The voltage holding ratio (VHR) was calculated from the following formula (1), where $V_1$ was the potential difference between the top electrode and the ITO transparent electrode when the rectangular voltage pulse was applied, and $V_2$ was the potential difference between the electrodes at 16.6 ms after pulse fall. Fig. 1 shows the relation between respective potential differences and the applied rectangular voltage pulse. The voltage holding ratio was measured 30 seconds after the dropwise addition of 1 mM concentration potassium chloride aqueous solution. The mean value of three measured values was employed as the voltage holding ratio (VHR) of the dielectric composition.

$$\mathrm{VHR} \;=\; V_2 / V_1 \qquad\qquad (1)$$

Example 1

Four hundred and twenty nine parts by weight of barium titanate (K-Plus 16, average particle diameter 0.06 $\mu$m, produced by Cabot, Inc.), 1050 parts by weight of $\gamma$-butyrolactone and 21.4 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-1. Six point eight parts by weight of an epoxy resin {"Epikote" (trade name) YX8000 produced by Japan Epoxy Resin Co., Ltd.}, 4.7 parts by weight of a curing agent {"RIKACID" (trade name) MH700 produced by New Japan Chemical Co., Ltd.}, 0.2 part by weight of a curing accelerator (N,N-dimethylbenzylamine) and 1.2 parts by weight of $\gamma$-butyrolactone were mixed to obtain epoxy resin solution B-1. Epikote YX8000 is a liquid epoxy resin with an epoxy equivalent of 205 g/eq. One hundred and fifty parts by weight of the dispersion A-1 and 3 parts by weight of the epoxy resin solution B-1 were mixed using a ball mill, to prepare paste composition C-1 in which the organic solvent content based on the total amount of the paste composition was 69 wt%. The content of the high dielectric constant inorganic particles in the dielectric composition obtained by curing C-1 was 90 wt% based on the total amount of the dielectric composition.

A glass substrate was coated with the paste composition C-1 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 50% (wavelength 400 nm).

The void percentage of the sample was measured and found to be 3%. The void percentage was measured according to the following method. A silicon wafer was entirely coated with the dielectric composition, to form a coating film. The coating film was formed by appropriately heating the spin-coated paste composition, to evaporate the organic solvent and to cure the resin. It was cut to obtain 5 sheets each having a size of about 2 cm x about 2.5 cm. Then, their more accurate sizes were measured using vernier calipers, to obtain the film area. From this film area and the film thickness obtained according to the film thickness measuring method of the above (3), the bulk volume A of the film was obtained. Then, Pore Sizer 9320 produced by Micromeritics was used to measure the pore volume B according to the mercury penetration method (measuring pressure range ... 100 kPa to 207 MPa, cell volume 15 cm$^2$) . The void percentage C (%) was obtained from C = 100 x B/A.

An aluminum substrate with a thickness of 300 $\mu$m was coated with the paste composition C-1 using a spin coater, and the coating was heat-treated at 80°C for 15 minutes to be dried, using an oven, and heat-treated at 175°C for 4 hours to be cured, for obtaining a dielectric composition (cured film). On the dielectric composition, aluminum electrodes were formed to prepare a dielectric property evaluation sample. The relative dielectric constant at 1 MHz was 38.

Example 2

A glass substrate was coated with the paste composition C-1 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.8 $\mu$m. The film thickness was adjusted by adjusting the spinning speed at the time of spin coating. The dielectric composition had an optical transmissivity of 65% (wavelength 400 nm).

Example 3

A glass substrate was coated with the paste composition C-1 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.4 $\mu$m. The film thickness was adjusted by adjusting the spinning speed at the time of spin coating. The dielectric composition had an optical transmissivity of 85% (wavelength 400 nm).

Example 4

A glass substrate was coated with the paste composition C-1 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.1$\mu$m. The film thickness was adjusted by adjusting the spinning speed at the time of spin coating. The dielectric composition had an optical transmissivity of 93% (wavelength 400 nm).

Example 5

One hundred and fifty parts by weight of the dispersion A-1 and 5 parts by weight of the epoxy resin solution B-1 were mixed using a ball mill, to prepare paste composition C-2 in which the organic solvent content based on the total amount of the paste composition was 68 wt%. The content of the high dielectric constant inorganic particles in the dielectric composition obtained by curing C-2 was 87 wt% based on the total amount of the dielectric composition. A glass substrate was coated with the paste composition C-2 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 55% (wavelength 400 nm). The relative dielectric constant of the dielectric composition prepared from the paste composition C-2 as described in Example 1, was 36 at 1 MHz.

Example 6

One hundred and fifty parts by weight of the dispersion A-1 and 12 parts by weight of the epoxy resin solution B-1 were mixed using a ball mill, to prepare paste composition C-3 in which the organic solvent content based on the total amount of the paste composition was 65 wt%. The content of the high dielectric constant inorganic particles in the dielectric composition obtained by curing C-3 was 77 wt% based on the total amount of the dielectric composition. A glass substrate was coated with the paste composition C-3 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4$\mu$m. The film thickness was adjusted by adjusting the spinning speed at the time of spin coating. The dielectric composition had an optical transmissivity of 70% (wavelength 400 nm). The relative dielectric constant of the dielectric composition prepared from the paste composition C-3 as described in Example 1, was 18 at 1 MHz.

Example 7

One hundred and fifty parts by weight of the dispersion A-1 and 20 parts by weight of the epoxy resin solution B-1 were mixed using a ball mill, to prepare paste composition C-4 in which the organic solvent content based on the total amount of the paste composition was 63 wt%. The content of the high dielectric constant inorganic particles in the dielectric composition obtained by curing C-4 was 68 wt% based on the total amount of the dielectric composition. A glass substrate was coated with the paste composition C-4 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 80% (wavelength 400 nm). The relative dielectric constant of the dielectric composition prepared from the paste composition C-4 as described in Example 1, was 12 at 1 MHz.

Example 8

Four hundred and twenty nine parts by weight of barium titanate T-1 with an average particle diameter of 0.03

μm prepared by a hydrothermal synthesis method, 1050 parts by weight of γ-butyrolactone and 21. 4 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-2. One hundred and fifty parts by weight of the dispersion A-2 and 3 parts by weight of the epoxy resin solution B-1 were mixed using a ball mill, to prepare paste composition C-5 in which the organic solvent content based on the total amount of the paste composition was 69 wt%. The content of the high dielectric constant inorganic particles in the dielectric composition obtained by curing C-5 was 90 wt% based on the total amount of the dielectric composition. A glass substrate was coated with the paste composition C-5 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 μm. The film thickness was adjusted by adjusting the spinning speed at the time of spin coating. The dielectric composition had an optical transmissivity of 75% (wavelength 400 nm). The relative dielectric constant of the dielectric composition prepared from the paste composition C-5 as described in Example 1, was 35 at 1 MHz.

Example 9

A glass substrate was coated with the paste composition C-5 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.8 μm. The film thickness was adjusted by adjusting the spinning speed at the time of spin coating. The dielectric composition had an optical transmissivity of 80% (wavelength 400 nm).

Example 10

A glass substrate was coated with the paste composition C-5 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.4 μm. The film thickness was adjusted by adjusting the spinning speed at the time of spin coating. The dielectric composition had an optical transmissivity of 92% (wavelength 400 nm).

Example 11

A glass substrate was coated with the paste composition C-5 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.1 μm. The film thickness was adjusted by adjusting the spinning speed at the time of spin coating. The dielectric composition had an optical transmissivity of 96% (wavelength 400 nm).

Example 12

One hundred and fifty parts by weight of the dispersion A-2 and 5 parts by weight of the epoxy resin solution B-1 were mixed using a ball mill, to prepare paste composition C-6 in which the organic solvent content based on the total amount of the paste composition was 68 wt%. The content of the high dielectric constant inorganic particles in the dielectric composition obtained by curing C-6 was 87 wt% based on the total amount of the dielectric composition. A glass substrate was coated with the paste composition C-6 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 μm. The film thickness was adjusted by adjusting the spinning speed at the time of spin coating. The dielectric composition had an optical transmissivity of 78% (wavelength 400 nm). The relative dielectric constant of the dielectric composition prepared from the paste composition C-6 as described in Example 1, was 32 at 1 MHz.

Example 13

One hundred and fifty parts by weight of the dispersion A-2 and 12 parts by weight of the epoxy resin solution B-1 were mixed using a ball mill, to prepare paste composition C-7 in which the organic solvent content based on the total amount of the paste composition was 65 wt%. The content of the high dielectric constant inorganic particles in the dielectric composition obtained by curing C-7 was 77 wt% based on the total amount of the dielectric composition. A glass substrate was coated with the paste composition C-7 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 μm. The film thickness was adjusted by adjusting the spinning speed at the time of spin coating. The dielectric composition had an optical transmissivity of 83% (wavelength 400 nm). The relative dielectric constant of the dielectric composition prepared from the paste composition C-7 as described in Example 1, was 17 at 1 MHz.

Example 14

One hundred and fifty parts by weight of the dispersion A-2 and 20 parts by weight of the epoxy resin solution B-1 were mixed using a ball mill, to prepare paste composition C-8 in which the organic solvent content based on the total amount of the paste composition was 63 wt%. The content of the high dielectric constant inorganic particles in the dielectric composition obtained by curing C-8 was 68 wt% based on the total amount of the dielectric composition. A glass substrate was coated with the paste composition C-8 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 μm. The film thickness was adjusted by adjusting the spinning speed at the time of spin coating. The dielectric composition had an optical transmissivity of 88% (wavelength 400 nm). The relative dielectric constant of the dielectric composition prepared from the paste composition C-8 as described in Example 1, was 12 at 1 MHz.

Example 15

Four hundred and twenty nine parts by weight of barium titanate {Barium Titanate, average particle diameter 0.022 μm (average particle diameter according to the manufacturer's specification, 0.018 μm), produced by Buhler PARTEC GmbH}, 1050 parts by weight of γ-butyrolactone and 21.4 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-3. One hundred and fifty parts by weight of the dispersion A-3 and 3 parts by weight of the epoxy resin solution B-1 were mixed using a ball mill, to prepare paste composition C-9 in which the organic solvent content based on the total amount of the paste composition was 69 wt%. The content of the high dielectric constant inorganic particles in the dielectric composition obtained by curing C-9 was 90 wt% based on the total amount of the dielectric composition. A glass substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 μm. The film thickness was adjusted by adjusting the spinning speed at the time of spin coating. The dielectric composition had an optical transmissivity of 80% (wavelength 400 nm).

A 300 μm thick aluminum substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) . On the dielectric composition, aluminum electrodes were formed to prepare a dielectric property evaluation sample. The relative dielectric constant at 1 MHz was 32.

Example 16

A glass substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.8 μm. The film thickness was adjusted by adjusting the spinning speed at the time of spin coating. The dielectric composition had an optical transmissivity of 83% (wavelength 400 nm).

Example 17

A glass substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.4 μm. The film thickness was adjusted by adjusting the spinning speed at the time of spin coating. The dielectric composition had an optical transmissivity of 94% (wavelength 400 nm).

Example 18

A glass substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.1 $\mu$m. The film thickness was adjusted by adjusting the spinning speed at the time of spin coating. The dielectric composition had an optical transmissivity of 97% (wavelength 400 nm).

Example 19

One hundred and fifty parts by weight of the dispersion A-3 and 5 parts by weight of the epoxy resin solution B-1 were mixed using a ball mill, to prepare paste composition C-10 in which the organic solvent content based on the total amount of the paste composition was 68 wt%. The content of the high dielectric constant inorganic particles in the dielectric composition obtained by curing C-10 was 87 wt% based on the total amount of the dielectric composition. A glass substrate was coated with the paste composition C-10 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 83% (wavelength 400 nm). The relative dielectric constant of the dielectric composition prepared from the paste composition C-10 as described in Example 1, was 30 at 1 MHz.

Example 20

One hundred and fifty parts by weight of the dispersion A-3 and 12 parts by weight of the epoxy resin solution B-1 were mixed using a ball mill, to prepare paste composition C-11. The content of the high dielectric constant inorganic particles in the dielectric composition obtained by curing C-11 was 77 wt% based on the total amount of the dielectric composition. A glass substrate was coated with the paste composition C-11 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 85% (wavelength 400 nm). The relative dielectric constant of the dielectric composition prepared from the paste composition C-11 as described in Example 1, was 16 at 1 MHz.

Example 21

One hundred and fifty parts by weight of the dispersion A-3 and 20 parts by weight of the epoxy resin solution B-1 were mixed using a ball mill, to prepare paste composition C-12. The content of the high dielectric constant inorganic particles in the dielectric composition obtained by curing C-12 was 68 wt% based on the total amount of the dielectric composition. A glass substrate was coated with the paste composition C-12 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 90% (wavelength 400 nm). The relative dielectric constant of the dielectric composition prepared from the paste composition C-12 as described in Example 1, was 12 at 1 MHz.

Example 22

Four hundred and twenty nine parts by weight of strontium titanate (HPS-2000, average particle diameter 0.045 $\mu$m, produced by TPL, Inc.), 1050 parts by weight of $\gamma$-butyrolactone and 21.4 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-4. One hundred and fifty parts by weight of the dispersion A-4 and 3 parts by weight of the epoxy resin solution B-1 were mixed using a ball mill, to prepare paste composition C-13 in which the organic solvent content based on the total amount of the paste composition was 69 wt%. The content of the high dielectric constant inorganic particles in the dielectric composition obtained by curing C-13 was 90 wt% based on the total amount of the dielectric composition.

A glass substrate was coated with the paste composition C-13 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 55% (wavelength 400 nm) . A 300 $\mu$m thick aluminum substrate was coated with the paste composition C-13 using a spin coater, and the coating was heat-treated at 80°C for 15 minutes to be dried, using an oven, and subsequently heat-treated at 175°C for 4 hours to be cured, for obtaining a dielectric composition (cured film). On the dielectric composition, aluminum electrodes were formed to prepare a dielectric property evaluation sample. The relative dielectric constant at 1 MHz was 27.

Example 23

A glass substrate was coated with the paste composition C-5 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 2 $\mu$m. The film thickness was adjusted by adjusting the spinning speed at the time of spin coating. The dielectric composition had an optical transmissivity of 65% (wavelength 400 nm).

Example 24

A glass substrate was coated with the paste composition C-9 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 2 $\mu$m. The film thickness was adjusted by adjusting the spinning speed at the time of spin coating. The dielectric composition had an optical transmissivity of 70% (wavelength 400 nm).

Example 25

Two hundred and twenty four parts by weight of barium titanate {Barium Titanate, average particle diameter 0.022 $\mu$m (average particle diameter according to the manufacturer's specification, 0.018 $\mu$m), produced by Buhler PARTEC GmbH}, 165 parts by weight of $\gamma$-butyrolactone and 11 parts by weight of a dispersant (BYK-W9010, a copolymer with acid groups respectively having a phosphoric acid ester skeleton, produced by BYK Japan K.K.) were kneaded using a homogenizer, to obtain dispersion A-5. One hundred and fifty parts by weight of the dispersion A-5 and 5. 9 parts by weight of the epoxy resin solution B-1 were mixed using a ball mill, to prepare paste composition C-14 in which the organic solvent content based on the total amount of the paste composition was 40 wt%. The content of the high dielectric constant inorganic particles in the dielectric composition obtained by curing C-14 was 90 wt% based on the total amount of the dielectric composition. A glass substrate was coated with the paste composition C-14 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 68% (wavelength 400 nm).

A 300 $\mu$m thick aluminum substrate was coated with the paste composition C-14 using a spin coater, and the coating was heat-treated at 80°C for 15 minutes to be dried, using an oven, and subsequently heat-treated at 175°C for 4 hours to be cured, for obtaining a dielectric composition (cured film). On the dielectric composition, aluminum electrodes were formed to prepare a dielectric property evaluation sample. The relative dielectric constant at 1 MHz was 34.

Example 26

One hundred and fifty parts by weight of the dispersion A-1, 3 parts by weight of the epoxy resin solution B-1 and 86 parts by weight of $\gamma$-butyrolactone were mixed using a ball mill, to prepare paste composition C-15 in which the organic solvent content based on the total amount of the paste composition was 80 wt%. The content of the high dielectric constant inorganic particles in the dielectric composition obtained by curing C-15 was 90 wt% based on the total amount of the dielectric composition. A glass substrate was coated with the paste composition C-15 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 0.8 $\mu$m. The film thickness was adjusted by adjusting the spinning speed at the time of spin coating. The dielectric composition had an optical transmissivity of 51% (wavelength 400 nm).

A 300 $\mu$m thick aluminum substrate was coated with the paste composition C-15 using a spin coater, and the coating was heat-treated at 80°C for 15 minutes to be dried, using an oven, and subsequently heat-treated at 175°C for 4 hours to be cured, for obtaining a dielectric composition (cured film) . On the dielectric composition, aluminum electrodes were formed to prepare a dielectric property evaluation sample. The relative dielectric constant at 1 MHz was 41.

Example 27

Four hundred and twenty nine parts by weight of barium titanate (K- Plus16, average particle diameter 0.06 $\mu$m, produced by Cabot, Inc.), 315 parts by weight of $\gamma$-butyrolactone and 21. 4 parts by weight of a dispersant (BYK-W9010, a copolymer with acid groups respectively having a phosphoric acid ester skeleton, produced by BYK Japan K.K.) were kneaded using a homogenizer, to obtain dispersion A-6. Seventy six point five parts by weight of the dispersion A-6 and 3 parts by weight of the epoxy resin solution B-1 were mixed using a ball mill, to prepare paste composition C-16 in which the organic solvent content based on the total amount of the paste composition was 40 wt%. The content of the high dielectric constant inorganic particles in the dielectric composition obtained by curing C-16 was 90 wt% based on the total amount of the dielectric composition. A glass substrate was coated with the paste composition C-16 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 50% (wavelength 400 nm). A 300 $\mu$m thick aluminum substrate was coated with the paste composition C-16 using a spin coater, and the coating was heat-treated at 80°C for 15 minutes to be dried, using an oven, and subsequently heat-treated at 175°C for 4 hours to be cured, for obtaining a dielectric composition (cured film) . On the dielectric composition, aluminum electrodes were formed to prepare a dielectric property evaluation sample. The relative dielectric constant at 1 MHz was 36.

Example 28

Four hundred and twenty nine parts by weight of barium titanate T-2 with an average particle diameter of 0.05 $\mu$m prepared by a hydrothermal synthesis method, 1050 parts by weight of $\gamma$-butyrolactone and 21. 4 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-7. One hundred and fifty parts by weight of the dispersion A-7, 189 parts by weight of the epoxy resin solution B-1 and 365 parts by weight of $\gamma$-butyrolactone were mixed using a ball mill, to prepare paste composition C-17 in which the organic solvent content based on the total amount of the paste composition was 69 wt %. The content of the high dielectric constant inorganic particles in the dielectric composition obtained by curing C-17 was 20 wt% based on the total amount of the dielectric composition. A glass substrate was coated with the paste composition C-17 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 82% (wavelength 400 nm).

A 300 $\mu$m thick aluminum substrate was coated with the paste composition C-17 using a spin coater, and the coating was heat-treated at 80°C for 15 minutes to be dried, using an oven, and subsequently heat-treated at 175°C for 4 hours to be cured, for obtaining a dielectric composition (cured film). On the dielectric composition, aluminum electrodes were formed to prepare a dielectric property evaluation sample. The relative dielectric constant at 1 MHz was 8.

Example 29

Fifteen point three parts by weight of an epoxy resin (NC3000 produced by Nippon Kayaku Co., Ltd.), 5. 3 parts by weight of a phenol novolak resin {"KAYAHARD" (trade name) KTG-105 produced by Nippon Kayaku Co., Ltd.}, 0.2 part by weight of a curing accelerator (triphenylphosphine produced by Hokko Chemical Industry Co., Ltd.) and 24.7 parts by weight of $\gamma$-butyrolactone were mixed to obtain epoxy resin solution B-2. One hundred and fifty parts by weight of the dispersion A-3 and 10.9 parts by weight of the epoxy resin solution B-2 were mixed using a ball mill, to prepare paste composition C-18 in which the organic solvent content based on the total amount of the paste composition was 70 wt%. The content of the high dielectric constant inorganic particles in the dielectric composition obtained by curing C-18 was 90 wt% based on the total amount of the dielectric composition. A glass substrate was coated with the paste composition C-18 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 1.4 $\mu$m. The film thickness was adjusted by adjusting the spinning speed at the time of spin coating. The dielectric composition had an optical transmissivity of 72% (wavelength 400 nm) .

A 300 $\mu$m thick aluminum substrate was coated with the paste composition C-18 using a spin coater, and the coating was heat-treated at 80°C for 15 minutes to be dried, using an oven, and subsequently heat-treated at 175°C for 4 hours to be cured, for obtaining a dielectric composition (cured film). On the dielectric composition, aluminum electrodes were formed to prepare a dielectric property evaluation sample. The relative dielectric constant at 1 MHz was 32.

Example 30

One hundred % by weight of a photopolymerizable acrylic resin {"CYCLOMER" (trade name) produced by Daicel Chemical Industries, Ltd.}, 10 parts by weight of a photo-radical generating agent {"IRGACURE" (trade name) 369, produced by Ciba Specialty Chemicals K. K.} and 90 parts by weight of PGMEA (propylene glycol methyl ether acetate) were stirred at room temperature for 2 hours, to obtain acrylic resin solution B-3. One hundred and fifty parts by weight of the dispersion A-3 and 4 .9 parts by weight of the acrylic resin solution B-3 were mixed using a ball mill, to prepare paste composition C-19 in which the organic solvent content based on the total amount of the paste composition was 69 wt%. The content of the high dielectric constant inorganic particles in the dielectric composition obtained by curing C-19 was 90 wt% based on the total amount of the dielectric composition. A glass substrate was coated with the paste composition C-19 using a spin coater, and the coating was heat-treated at 80°C for 15 minutes to be dried, using an oven, and subsequently exposed to an extra-high pressure mercury lamp on the entire surface, to be cured, for obtaining a dielectric composition (cured film) with a film thickness of 1.4 $\mu$m. The film thickness was adjusted by adjusting the spinning speed at the time of spin coating. The dielectric composition had an optical transmissivity of 75% (wavelength 400 nm).

A 300 $\mu$m thick aluminum substrate was coated with the paste composition C-19 using a spin coater, and the coating was heat-treated at 80°C for 15 minutes to be dried, using an oven, and subsequently exposed to an extra-high pressure mercury lamp on the entire surface, to be cured, for obtaining a dielectric composition (cured film). On the dielectric composition, aluminum electrodes were formed to prepare a dielectric property evaluation sample. The relative dielectric constant at 1 MHz was 28.

Comparative Example 1

Three hundred and twenty three parts by weight of barium titanate (BT-05, average particle diameter 0. 5 $\mu$m, produced by Sakai Chemical Industry Co. , Ltd.), 18 parts by weight of $\gamma$-butyrolactone and 0.2 part by weight of a dispersant (BYK-W9010, a copolymer with acid groups respectively having a phosphoric acid ester skeleton, produced by BYK Japan K.K.) were mixed and dispersed using a homogenizer with ice cooling for 1 hour, to obtain dispersion A-8. Twelve point eight parts by weight of an epoxy resin (EPPN502H produced by Nippon Kayaku Co. , Ltd.), 7.8 parts by weight of a phenol novolak resin (TD-2131 produced by Dainippon Ink and Chemicals, Incorporated), 0.2 part by weight of a curing accelerator (triphenylphosphine produced by Hokko Chemical Industry Co., Ltd.) and 24.8 parts by weight of $\gamma$-butyrolactone were mixed to obtain epoxy resin solution B-4. Three hundred and forty one point two parts by weight of the dispersion A-8 and 45.6 parts by weight of the epoxy resin solution B-4 were mixed using a ball mill, to prepare paste composition C-20 in which the organic solvent content based on the total amount of the paste composition was 11 wt%. The content of the high dielectric constant inorganic particles in the dielectric composition obtained by curing C-20 was 94 wt% based on the total amount of the dielectric composition. A glass substrate was coated with the paste composition C-20 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 10 $\mu$m. The film thickness was adjusted by adjusting the spinning speed at the time of spin coating. The dielectric composition had an optical transmissivity of 8% (wavelength 400 nm).

A 300 $\mu$m thick aluminum substrate was coated with the paste composition C-20 using a spin coater, and the coating was heat-treated at 80°C for 15 minutes to be dried, using an oven, and subsequently heat-treated at 175°C for 4 hours to be cured, for obtaining a dielectric composition (curedfilm). On the dielectric composition, aluminum electrodes were formed to prepare a dielectric property evaluation sample. The relative dielectric constant at 1 MHz was 95.

Comparative Example 2

Sixty two point three parts by weight of barium titanate (BT-05, average particle diameter 0. 5 $\mu$m, produced by Sakai Chemical Industry Co., Ltd.), 21.9 parts by weight of barium titanate (HPB-1000, average particle diameter 0.059 $\mu$m, produced by TPL, Inc.), 15 parts by weight of $\gamma$-butyrolactone and 0.8 part by weight of a dispersant (BYK-W9010, a copolymer with acid groups respectively having a phosphoric acid ester skeleton, produced by BYK Japan K.K.) were kneaded using a homogenizer, to obtain dispersion A-9. Two point two parts by weight of an epoxy resin (EPPN502H produced by Nippon Kayaku Co., Ltd.), 1.4 parts by weight of a phenol novolak resin (TD-2131 produced by Dainippon Ink and Chemicals, Incorporated), 0.04 part by weight of a curing accelerator (triphenylphosphine produced by Hokko Chemical Industry Co., Ltd.) and 7.1 parts by weight of $\gamma$-butyrolactone were mixed to obtain epoxy resin solution B-5. One hundred parts by weight of the dispersion A-9 and 10.7 parts by weight of the epoxy resin solution B-5 were mixed using a ball mill, to prepare paste composition C-21 in which the organic solvent content based on the total amount of the paste composition was 20 wt%. The content of the high dielectric constant inorganic particles in the dielectric composition obtained by curing C-21 was 95 wt% based on the total amount of the dielectric composition. A glass substrate was coated with the paste composition C-21 using a spin coater, and the coating was heat-treated at 80°C for 15 minutes to be dried, using an oven, and subsequently heat-treated at 175°C for 4 hours to be cured, for obtaining a dielectric composition (cured film) with a film thickness of 10 $\mu$m. The film thickness was adjusted by adjusting the spinning speed at the time of spin coating. The dielectric composition had an optical transmissivity of 5% (wavelength 400 nm).

A 300 $\mu$m thick aluminum substrate was coated with the paste composition C-21 using a spin coater, and the coating was heat-treated at 80°C for 15 minutes to be dried, using an oven, and subsequently heat-treated at 175°C for 4 hours to be cured, for obtaining a dielectric composition (curedfilm). On the dielectric composition, aluminum electrodes were formed to prepare a dielectric property evaluation sample. The relative dielectric constant at 1 MHz was 123.

Comparative Example 3

Two hundred parts by weight of barium titanate (BT-01, average particle diameter 0.1$\mu$m, produced by Sakai Chemical Industry Co. , Ltd.) and 400 parts by weight of toluene were mixed and dispersed using a homogenizer with ice cooling for 1 hour, to obtain dispersion A-10. One hundred parts by weight of an epoxy resin (YD-8125 produced by Tohto Kasei Co., Ltd.), 90 parts by weight of a curing agent (HN-5500 produced by Hitachi Chemical Co., Ltd.) and 1 part by weight of a curing accelerator ("EPICURE" produced by Japan Epoxy Resin Co., Ltd.) were mixed to obtain epoxy resin solution B-6. Sixty parts by weight of the dispersion A-10 and 1.9 parts by weight of B-6 were mixed to prepare paste composition C-22 in which the organic solvent content based on the total amount of the paste composition was 69 wt%. The content of the high dielectric constant inorganic particles in the dielectric composition obtained by curing C-22 was 90 wt% based on the total amount of the dielectric composition. A glass substrate was coated with the paste composition C-22 using a spin coater, and the coating was heat-treated at 120°C for 15 hours to be cured, using an oven, for obtaining a dielectric composition (cured film) with a film thickness of 1.4 $\mu$m. The film thickness was adjusted by adjusting the spinning speed at the time of spin coating. The dielectric composition had an optical transmissivity of 28% (wavelength 400 nm). A 300 $\mu$m thick aluminum substrate was coated with the paste composition C-22 using a spin coater, and the coating was heat-treated at 120°C for 15 hours to be cured, using an oven, for obtaining a dielectric composition (cured film). On the dielectric composition, aluminum electrodes were formed to prepare a dielectric property evaluation sample. The relative dielectric constant at 1 MHz was 34.

Comparative Example 4

Two hundred and twenty four parts by weight of barium titanate (K-Plus16, average particle diameter 0.06 $\mu$m, produced by Cabot, Inc.), 105 parts by weight of $\gamma$-butyrolactone and 11 parts by weight of a dispersant (BYK-W9010, a copolymer with acid groups respectively having a phosphoric acid ester skeleton, produced by BYK Japan K.K.) were kneaded using a homogenizer, to obtain dispersion A-11. One hundred and fifty parts by weight of the dispersion A-11 and 5. 9 parts by weight of the epoxy resin solution B-1 were mixed using a ball mill, to prepare paste composition C-23 in which the organic solvent content based on the total amount of the paste composition was 30 wt%. The content of the high dielectric constant inorganic particles in the dielectric composition obtained by curing C-23 was 90 wt% based on the total amount of the dielectric composition. A glass substrate was coated with the paste composition C-23 using a spin coater, and the coating was heat-treated at 80°C for 15 minutes to be dried, using an oven, and subsequently heat-treated at 175°C for 4 hours to be cured, for obtaining a dielectric composition (cured film). Since the paste composition C-22 was high in viscosity, a flat coating film could not be obtained by a spin coater. The optical transmissivity was measured at near a region with a film thickness of 2 $\mu$m and found to be 35% (wavelength 400 nm).

A 300 $\mu$m thick aluminum substrate was coated with the paste composition C-23 using a spin coater, and the coating was heat-treated at 80°C for 15 minutes to be dried, using an oven, and subsequently heat-treated at 175°C for 4 hours to be cured, for obtaining a dielectric composition (cured film) . On the dielectric composition, aluminum electrodes were formed to prepare a dielectric property evaluation sample. The relative dielectric constant at 1 MHz was 40.

Comparative Example 5

One hundred and fifty parts by weight of the dispersion A-1, 3 parts by weight of the epoxy resin solution B-1 and 324 parts by weight of $\gamma$-butyrolactone were mixed using a ball mill, to prepare paste composition C-24 in which the organic solvent content based on the total amount of the paste composition was 90 wt%. The content of the high dielectric constant inorganic particles in the dielectric composition obtained by curing C-24 was 90 wt% based on the total amount of the dielectric composition. A glass substrate was coated with the paste composition C-24 using a spin coater, and the coating was heat-treated at 80°C for 15 minutes to be dried, using an oven, and subsequently heat-treated at 175°C for 4 hours to be cured, for obtaining a dielectric composition (cured film). However, since the viscosity was too low, no perfectly continuous film could be formed. So, the optical transmissivity of the dielectric composition could not be meas-

ured.

A 300 $\mu$m thick aluminum substrate was coated with the paste composition C-24 using a spin coater, and the coating was heat-treated at 80°C for 15 minutes to be dried, using an oven, and subsequently heat-treated at 175°C for 4 hours to be cured, for obtaining a dielectric composition (cured film) . On the dielectric composition, aluminum electrodes were formed to prepare a dielectric property evaluation sample. However, since the film was not perfectly continuous, the top and bottom electrodes were short-circuited, not allowing the dielectric constant to be measured.

Example 31

One hundred and forty four point two parts by weight of barium titanate (T-BTO-020RF, average particle diameter 0.027 $\mu$m, produced by Toda Kogyo Corp.), 350 parts by weight of $\gamma$-butyrolactone and 5.8 parts by weight of a dispersant (BYK-W9010, a copolymer with acid groups respectively having a phosphoric acid ester skeleton, produced by BYK Japan K.K.) were kneaded and dispersed using a homogenizer with ice cooling for 2 hours, to obtain dispersion A-12. The dispersant content of the dispersion A-12 was 4 wt% based on the weight of the high dielectric constant inorganic particles. In the particle diameter distribution of the dispersion A-12, the 50% size was 0.25 $\mu$m, and the 90% size was 0.42 $\mu$m. In the dispersion A-12, the aggregates of high dielectric constant inorganic particles were not sufficiently loosened, and the particle diameter of the high dielectric constant inorganic particles obtained by the particle diameter distribution measurement was larger than the average particle diameter of the raw high dielectric constant inorganic particles.

Six point eight parts by weight of an epoxy resin {"Epikote" (trade name) YX8000 produced by Japan Epoxy Resin Co., Ltd.}, 4.7 parts by weight of a curing agent {"RIKACID" (trade name) MH700 produced by New Japan Chemical Co., Ltd. and 0.2 part by weight of a curing accelerator (N,N-dimethylbenzylamine) were mixed to obtain epoxy resin solution B-7. One hundred and fifty parts by weight of the dispersion A-12 and 8.2 parts by weight of the epoxy resin solution B-7 were mixed using a ball mill, to prepare paste composition C-25 in which the organic solvent content based on the total amount of the paste composition was 67 wt%. The content of the high dielectric constant inorganic particles in the dielectric composition obtained by curing C-25 was 81 wt% based on the total amount of the dielectric composition.

The paste composition C-25 was used to obtain a dielectric composition (cured film) with a film thickness of 1.4 $\mu$m as described in Example 1. The dielectric composition had an optical transmissivity of 79% (wavelength 400 nm). The paste composition C-25 was used to obtain a dielectric property evaluation sample as described in Example 1. The relative dielectric constant at 1 MHz was 22.

Example 32

Four hundred and sixteen point seven parts by weight of barium titanate (T-BTO-020RF, average particle diameter 0. 027 $\mu$m, produced by Toda Kogyo Corp.), 1050 parts by weight of $\gamma$-butyrolactone and 33.3 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-13. The dispersant content of the dispersion A-13 was 8 wt% based on the weight of the high dielectric constant inorganic particles. In the particle diameter distribution of the dispersion A-13, the 50% size was 0.04 $\mu$m, and the 90% size was 0.07 $\mu$m. Since the content of the dispersant based on the weight of the high dielectric constant inorganic particles was larger than that of the dispersion A-12, the aggregates of high dielectric constant inorganic particles could be loosened more, and the particle diameter of the high dielectric constant inorganic particles obtained by the particle diameter distribution measurement approached the average particle diameter of the raw high dielectric constant inorganic particles.

One hundred and fifty parts by weight of the dispersion A-13 and 6 parts by weight of the epoxy resin solution B-7 were mixed using a ball mill, to prepare paste composition C-26 in which the organic solvent content based on the total amount of the paste composition was 67 wt%. The content of the high dielectric constant inorganic particles in the dielectric composition obtained by curing C-26 was 81 wt% based on the total amount of the dielectric composition.

The paste composition C-26 was used to obtain a dielectric composition (cured film) with a film thickness of 1.4 $\mu$m as described in Example 1. The dielectric composition had an optical transmissivity of 87% (wavelength 400 nm). The paste composition C-25 was used to obtain a dielectric property evaluation sample as described in Example 1. The relative dielectric constant at 1 MHz was 27.

Example 33

Three hundred and ninety one point three parts by weight of barium titanate (T-BTO-020RF, average particle diameter 0.027 $\mu$m, produced by Toda Kogyo Corp.), 1050 parts by weight of $\gamma$-butyrolactone and 58.7 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-14. The dispersant content of the dispersion A-14 was 15 wt% based on the weight of the high dielectric constant inorganic particles. In the particle diameter distribution of the dispersion A-14, the 50% size was 0.025 $\mu$m, and the 90% size was 0.06 $\mu$m. Since the content of the dispersant based on the weight of the high dielectric constant inorganic particles was sufficiently larger than those of the dispersions A-12 and A-13, the aggregates of high dielectric constant inorganic particles could be sufficiently loosened, and the particle diameter of the high dielectric constant inorganic particles obtained by the particle diameter distribution measurement approached the average particle diameter of the raw high dielectric constant inorganic particles more closely.

One hundred and fifty parts by weight of the dispersion A-14 and 2.9 parts by weight of the epoxy resin solution B-7 were mixed using a ball mill, to prepare paste composition C-27 in which the organic solvent content based on the total amount of the paste composition was 69 wt%. The content of the high dielectric constant inorganic particles in the dielectric composition obtained by curing C-27 was 81 wt% based on the total amount of the dielectric composition.

The paste composition C-27 was used to obtain a dielectric composition (cured film) with a film thickness of 1.4 $\mu$m as described in Example 1. The film thickness was adjusted by adjusting the spinning speed at the time of spin coating. The dielectric composition had an optical transmissivity of 97% (wavelength 400 nm). The smallest value of the optical transmissivity in a wavelength range from 400 to 700 nm was 88% (wavelength 530 nm). The paste composition C-27 was used to obtain a dielectric property evaluation sample as described in Example 1. The relative dielectric constant at 1 MHz was 28.

A glass substrate with ITO was coated with the paste composition C-27 using a spin coater, and the coating was dried at 80°C for 15 minutes to be dried, using an oven, and subsequently cured at 175°C for 4 hours, to obtain a dielectric composition (cured film) . The glass substrate with ITO had had ITO formed by sputtering to have a film thickness of 150 nm on 1733 glass. The dielectric composition had an optical transmissivity of 98% (wavelength 400 nm).

On the dielectric composition, an aluminum electrode was formed as the top electrode, to prepare capacitor D-1 consisting of glass/ITO electrode/dielectric composition/aluminum electrode. The aluminum electrode was formed by vacuum evaporation through a mask. The relative dielectric constant of the capacitor D-1 at 1 kHz was 29.

ITO was used instead of aluminum as the top electrode, to prepare capacitor D-2 consisting of glass/ITO electrode/dielectric composition/ITO electrode. The ITO layer as the top electrode was formed by sputtering. Further, Ni-Cr/copper layers were used instead of the aluminum electrode as the top electrode, to prepare capacitor D-3 consisting of glass/ITO electrode/dielectric composition/Ni-Cr/copper. To form the top electrode, Ni-Cr and copper layers were formed by sputtering in this order, and further electrolytic copper plating was performed to form a conductive layer. Then etching was used for patterning. The relative dielectric constant values of the capacitors D-2 and D-3 at 1 kHz were 29 respectively.

Example 34

Three hundred and ninety one point three parts by weight of barium titanate (T-BTO-010RF, average particle diameter 0.012 $\mu$m, produced by Toda Kogyo Corp.), 1050 parts by weight of $\gamma$-butyrolactone and 58.7 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-15. The dispersant content of the dispersion A-15 was 15 wt% based on the weight of the high dielectric constant inorganic particles. In the diameter distribution of the dispersion A-15, the 50% size was 0.02 $\mu$m, and the 90% size was 0.05 $\mu$m.

One hundred and fifty parts by weight of the dispersion A-15 and 3.4 parts by weight of the epoxy resin solution B-1 were mixed using a ball mill, to prepare paste composition C-28 in which the organic solvent content based on the total amount of the paste composition was 68 wt%. The content of the high dielectric constant inorganic particles in the dielectric composition obtained by curing C-28 was 81 wt% based on the total amount of the dielectric composition.

The paste composition C-28 was used to obtain a dielectric composition (cured film) with a film thickness of 1.4$\mu$m as described in Example 1. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 90% (wavelength 570 nm). The paste composition C-28 was used to obtain a dielectric property evaluation sample as described in Example 1. The relative dielectric constant at 1 MHz was 23.

8 Example 35

Three hundred and ninety one point three parts by weight of barium titanate (T-BTO-010RF, average particle diameter 0.012 $\mu$m, produced by Toda Kogyo Corp.), 1050 parts by weight of $\gamma$-butyrolactone and 58.7 parts by weight of a dispersant (BYK-111, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-16. The dispersant content of the dispersion A-16 was 15 wt% based on the weight of the high dielectric constant inorganic particles. In the particle diameter distribution of the dispersion A-16, the 50% size was 0.02 $\mu$m, and the 90% size was 0.04 $\mu$m.

One hundred and fifty parts by weight of the dispersion A-16 and 3.4 parts by weight of the epoxy resin solution B-1 were mixed using a ball mill, to prepare paste composition C-28 in which the organic solvent content based on the total amount of the paste composition was 68 wt%. The content of the high dielectric constant inorganic particles in the dielectric composition obtained by curing C-29 was 81 wt% based on the total amount of the dielectric composition.

The paste composition C-29 was used to obtain a dielectric composition (cured film) with a film thickness of 1. 4 $\mu$m as described in Example 1. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 90% (wavelength 530 nm). The paste composition C-29 was used to obtain a dielectric property evaluation sample as described in Example 1. The relative dielectric constant at 1 MHz was 23.

Example 36

Six hundred and fifty two parts by weight of barium titanate (T-BTO-020RF, average particle diameter 0.027 $\mu$m, produced by Toda Kogyo Corp.), 750 parts by weight of $\gamma$-butyrolactone and 97.8 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-17. The dispersant content of the dispersion A-17 was 15 wt% based on the weight of the high dielectric constant inorganic particles. In the particle diameter distribution of the dispersion A-17, the 50% size was 0.025 $\mu$m, and the 90% size was 0.06 $\mu$m. One hundred and fifty parts by weight of the dispersion A-17 and 5.7 parts by weight of the epoxy resin solution B-1 were mixed using a ball mill, to prepare paste composition C-30 in which the organic solvent content based on the total amount of the paste composition was 48 wt%. The content of the high dielectric constant inorganic particles in the dielectric composition obtained by curing C-30 was 81 wt% based on the total amount of the dielectric composition.

The paste composition C-30 was used to obtain a dielectric composition (cured film) with a film thickness of 4 $\mu$m as described in Example 1. The film thickness was adjusted by adjusting the spinning speed at the time of spin coating. The dielectric composition had an optical transmissivity of 97% (wavelength 400 nm). The smallest value of the optical transmissivity in a wavelength range from 400 to 700 nm was 88% (wavelength 530 nm). The paste composition C-26 was used to obtain a dielectric property evaluation sample as described in Example 1. The relative dielectric constant at 1 MHz was 29.

Example 37

Four hundred and thirty two point six parts by weight of barium titanate (T-BTO-010RF, average particle diameter 0. 012 $\mu$m, produced by Toda Kogyo Corp.), 1050 parts by weight of $\gamma$-butyrolactone and 17.4 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-18. The dispersant content of the dispersion A-18 was 4 wt% based on the weight of the high dielectric constant inorganic particles. In the diameter distribution of the dispersion A-18, the 50% size was 0.30 $\mu$m, and the 90% size was 0.55 $\mu$m. In the dispersion A-18, as in the dispersion A-12, since the dispersant content of the high dielectric constant inorganic particles was small, the aggregates of high dielectric constant inorganic particles were not sufficiently loosened, and the particle diameter of the high dielectric constant inorganic particles obtained by the particle diameter distribution measurement was larger than the average particle diameter of the raw high dielectric constant inorganic particles.

One hundred and fifty parts by weight of the dispersion A-18 and 8.2 parts by weight of the epoxy resin solution B-7 were mixed using a ball mill, to prepare paste composition C-31 in which the organic solvent content based on the total amount of the paste composition was 67 wt%. The content of the high dielectric constant inorganic particles in the dielectric composition obtained by curing C-31 was 81 wt% based on the total amount of the dielectric composition.

The paste composition C-31 was used to obtain a dielectric composition (cured film) with a film thickness of 1.4$\mu$m as described in Example 1. The film thickness was adjusted by adjusting the spinning speed at the time of spin coating. The dielectric composition had an optical transmissivity of 78% (wavelength 400 nm). The paste composition C-31 was used to obtain a dielectric property evaluation sample as described in Example 1. The relative dielectric constant at 1 MHz was 16.

Example 38

Four hundred and twenty point six parts by weight of barium titanate (T-BTO-010RF, average particle diameter 0. 012 $\mu$m, produced by Toda Kogyo Corp.), 1050 parts by weight of $\gamma$-butyrolactone and 29.4 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-19. The dispersant content of the dispersion A-19 was 7 wt% based on the weight of the high dielectric constant inorganic particles. In the particle diameter distribution of the dispersion A-19, the 50% size was 0.04 $\mu$m, and the 90% size was 0.08 $\mu$m. Since the content of the dispersant based on the weight of the high dielectric constant inorganic particles was larger than that of the dispersion A-18, the aggregates of high dielectric constant inorganic particles could be loosened more, and the particle diameter of the high dielectric constant inorganic particles obtained by the particle diameter distribution measurement approached the average particle diameter of the raw high dielectric constant inorganic particles.

One hundred and fifty parts by weight of the dispersion A-19 and 6.5 parts by weight of the epoxy resin solution B-7 were mixed using a ball mill, to prepare paste composition C-32 in which the organic solvent content based on the total amount of the paste composition was 67 wt%. The content of the high dielectric constant inorganic particles in the dielectric composition obtained by curing C-32 was 81 wt% based on the total amount of the dielectric composition.

The paste composition C-32 was used to obtain a dielectric composition (cured film) with a film thickness of 1. 4 $\mu$m as described in Example 1. The film thickness was adjusted by adjusting the spinning speed at the time of spin coating. The dielectric composition had an optical transmissivity of 89% (wavelength 400 nm). The paste composition C-32 was used to obtain a dielectric property evaluation sample as described in Example 1. The relative dielectric constant at 1 MHz was 22.

Example 39

Three hundred and seventy five parts by weight of barium titanate (T-BTO-010RF, average particle diameter 0. 012 $\mu$m, produced by Toda Kogyo Corp.), 1050 parts by weight of $\gamma$-butyrolactone and 75 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-20. The dispersant content of the dispersion A-20 was 20 wt% based on the weight of the high dielectric constant inorganic particles. In the particle diameter distribution of the dispersion A-20, the 50% size was 0.016 $\mu$m, and the 90% size was 0.04 $\mu$m. In the comparison between the dispersion A-14 using inorganic particles with an average particle diameter of 0.027 $\mu$m and the dispersion A-20 using inorganic particles with an average particle diameter of 0.012 $\mu$m, it can be seen that if the content of the dispersant is increased in the case where the dispersion contains particles with a smaller average particle diameter, the dispersion can have a particle diameter distribution closer to that of primary particles.

One hundred and fifty parts by weight of the dispersion A-20 and 4.2 parts by weight of the epoxy resin solution B-7 were mixed using a ball mill, to prepare paste composition C-33 in which the organic solvent content based on the total amount of the paste composition was 68 wt%. The content of the high dielectric constant inorganic particles in the dielectric composition obtained by curing C-33 was 75 wt% based on the total amount of the dielectric composition.

The paste composition C-33 was used to obtain a dielectric composition (cured film) with a film thickness of 1.4 $\mu$m as described in Example 1. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 90% (wavelength 510 nm). The paste composition C-33 was used to obtain a dielectric property evaluation sample as described in Example 1. The relative dielectric constant at 1 MHz was 22.

Example 40

Three hundred and sixty parts by weight of barium titanate (T-BTO-010RF, average particle diameter 0.012 $\mu$m, produced by Toda Kogyo Corp.), 1050 parts by weight of $\gamma$-butyrolactone and 90 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-21. The dispersant content of the dispersion A-21 was 25 wt% based on the weight of the high dielectric constant inorganic particles. In the particle diameter distribution of the dispersion A-21, the 50% size was 0.016 $\mu$m, and the 90% size was 0.04 $\mu$m.

One hundred and fifty parts by weight of the dispersion A-21 and 4 parts by weight of the epoxy resin solution B-7 were mixed using a ball mill, to prepare paste composition C-34 in which the organic solvent content based on the total amount of the paste composition was 68 wt% . The content of the high dielectric constant inorganic particles in the dielectric composition obtained by curing C-34 was 72 wt% based on the total amount of the dielectric composition.

The paste composition C-34 was used to obtain a dielectric composition (cured film) with a film thickness of 1.4 $\mu$m as described in Example 1. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 91% (wavelength 530 nm). The paste composition C-34 was used to obtain a dielectric property evaluation sample as described in Example 1. The relative dielectric constant at 1 MHz was 18.

Example 41

Three hundred and fifty two parts by weight of barium titanate (T-BTO-010RF, average particle diameter 0.012$\mu$m, produced by Toda Kogyo Corp.), 1050 parts by weight of $\gamma$-butyrolactone and 98 parts by weight of a dispersant (BYK-W9010, a copolymer with acid groups respectively having a phosphoric acid ester skeleton, produced by BYK Japan K.K.) were kneaded using Ultra Apex Mill (produced by Kotobuki Industries Co., Ltd.), to obtain dispersion A-22. The dispersant content of the dispersion A-22 was 28 wt% based on the weight of the high dielectric constant inorganic particles. In the particle diameter distribution of the dispersion A-22, the 50% size was 0.016 $\mu$m, and the 90% size was 0.04 $\mu$m. One hundred and fifty parts by weight of the dispersion A-22 and 4 parts by weight of the epoxy resin solution B-7 were mixed using a ball mill, to prepare paste composition C-35 in which the organic solvent content based on the total amount of the paste composition was 67 wt%. The content of the high dielectric constant inorganic particles in the dielectric composition obtained by curing C-35 was 70 wt% based on the total amount of the dielectric composition.

The paste composition C-35 was used to obtain a dielectric composition (cured film) with a film thickness of 1. 4 $\mu$m as described in Example 1. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 92% (wavelength 510 nm). The paste composition C-35 was used to obtain a dielectric property evaluation sample as described in Example 1. The relative dielectric constant at 1 MHz was 9. In the dispersion A-22, the amount of the dispersant was 28 wt% based on the weight of the high dielectric constant inorganic particles, but since the high dielectric constant inorganic particles could not be highly packed, the relative dielectric constant declined.

Example 42

Three hundred and ninety one point three parts by weight of barium titanate {Barium Titanate, average particle diameter 0.022 $\mu$m (average particle diameter according to the manufacturer's specification, 0.018 $\mu$m), produced by Buhler PARTEC GmbH}, 1050 parts by weight of $\gamma$-butyrolactone and 58.7 parts by weight of a dispersant (BYK-W9010, a copolymer with acid groups respectively having a phosphoric acid ester skeleton, produced by BYK Japan K. K.) were kneaded using Ultra Apex Mill (produced by Kotobuki Industries Co., Ltd.), to obtain dispersion A-23. The dispersant content of the dispersion A-23 was 15 wt% based on the weight of the high dielectric constant inorganic particles. In the particle diameter distribution of the dispersion A-23, the 50% size was 0.025 $\mu$m, and the 90% size was 0.06 $\mu$m.

One hundred and fifty parts by weight of the dispersion A-23 and 2.9 parts by weight of the epoxy resin solution B-7 were mixed using a ball mill, to prepare paste composition C-36 in which the organic solvent content based on the total amount of the paste composition was 69 wt%. The content of the high dielectric constant inorganic particles in the dielectric composition obtained by curing C-36 was 81 wt% based on the total amount of the dielectric composition.

The paste composition C-36 was used to obtain a dielectric composition (cured film) with a film thickness of 1. 4$\mu$m as described in Example 1. The film thickness was adjusted by adjusting the spinning speed at the time of spin coating. The dielectric composition had an optical transmissivity of 96% (wavelength 400 nm). The smallest value of the optical transmissivity in a wavelength range from 400 to 700 nm was 94% (wavelength 580 nm). The paste composition C-36 was used to obtain a dielectric property evaluation sample as described in Example 1. The relative dielectric constant at 1 MHz was 18.

Table 1

| | Resin solution | | Dispersion | | | | Content of high dielectric constant inorganic particles (wt%) | Content of solvent based on the amount of paste composition (wt%) | Film thickness ($\mu$m) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles ($\mu$m) | | | | | @1kHz | @1MHz |
| Example 1 | Epoxy resin (B-1) | 3 | A-1 | 150 | Barium titanate | 0.06 | 90 | 69 | 1.4 | 50 | 45 | 38 |
| Example 2 | Epoxy resin (B-1) | 3 | A-1 | 150 | Barium titanate | 0.06 | 90 | 69 | 0.8 | 65 | 45 | 38 |
| Example 3 | Epoxy resin (B-1) | 3 | A-1 | 150 | Barium titanate | 0.06 | 90 | 69 | 0.4 | 85 | 45 | 38 |
| Example 4 | Epoxy resin (B-1) | 3 | A-1 | 150 | Barium titanate | 0.06 | 90 | 69 | 0.1 | 93 | 45 | 38 |
| Example 5 | Epoxy resin (B-1) | 5 | A-1 | 150 | Barium titanate | 0.06 | 87 | 68 | 1.4 | 55 | 42 | 36 |
| Example 6 | Epoxy resin (B-1) | 12 | A-1 | 150 | Barium titanate | 0.06 | 77 | 65 | 1.4 | 70 | 21 | 18 |
| Example 7 | Epoxy resin (B-1) | 20 | A-1 | 150 | Barium titanate | 0.06 | 68 | 63 | 1.4 | 80 | 14 | 12 |

| | Resin solution | | Dispersion | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles (μm) | | | | | @1kHz | @1MHz |
| Example 8 | Epoxy resin (B-1) | 3 | A-2 | 150 | Barium titanate | 0.03 | 90 | 69 | 1.4 | 75 | 41 | 35 |
| Example 9 | Epoxy resin (B-1) | 3 | A-2 | 150 | Barium titanate | 0.03 | 90 | 69 | 0.8 | 80 | 41 | 35 |
| Example 10 | Epoxy resin (B-1) | 3 | A-2 | 150 | Barium titanate | 0.03 | 90 | 69 | 0.4 | 92 | 41 | 35 |
| Example 11 | Epoxy resin (B-1) | 3 | A-2 | 150 | Barium titanate | 0.03 | 90 | 69 | 0.1 | 96 | 41 | 35 |
| Example 12 | Epoxy resin (B-1) | 5 | A-2 | 150 | Barium titanate | 0.03 | 87 | 68 | 1.4 | 78 | 37 | 32 |
| Example 13 | Epoxy resin (B-1) | 12 | A-2 | 150 | Barium titanate | 0.03 | 77 | 65 | 1.4 | 83 | 21 | 17 |
| Example 14 | Epoxy resin (B-1) | 20 | A-2 | 150 | Barium titanate | 0.03 | 68 | 63 | 1.4 | 88 | 14 | 12 |

| | Resin solution | | Dispersion | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles (μm) | | | | | @1kHz | @1MHz |
| Example 15 | Epoxy resin (B-1) | 3 | A-3 | 150 | Barium titanate | 0.022 | 90 | 69 | 1.4 | 80 | 37 | 32 |
| Example 16 | Epoxy resin (B-1) | 3 | A-3 | 150 | Barium titanate | 0.022 | 90 | 69 | 0.8 | 83 | 37 | 32 |
| Example 17 | Epoxy resin (B-1) | 3 | A-3 | 150 | Barium titanate | 0.022 | 90 | 69 | 0.4 | 94 | 37 | 32 |
| Example 18 | Epoxy resin (B-1) | 3 | A-3 | 150 | Barium titanate | 0.022 | 90 | 69 | 0.1 | 97 | 37 | 32 |
| Example 19 | Epoxy resin (B-1) | 5 | A-3 | 150 | Barium titanate | 0.022 | 87 | 68 | 1.4 | 83 | 36 | 30 |
| Example 20 | Epoxy resin (B-1) | 12 | A-3 | 150 | Barium titanate | 0.022 | 77 | 65 | 1.4 | 85 | 19 | 16 |
| Example 21 | Epoxy resin (B-1) | 20 | A-3 | 150 | Barium titanate | 0.022 | 68 | 63 | 1.4 | 90 | 14 | 12 |

(continued)

| | Resin solution | | Dispersion | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles (μm) | | | | | @1kHz | @1MHz |
| Example 22 | Epoxy resin (B-1) | 3 | A-4 | 150 | Strontium titanate | 0.045 | 90 | 69 | 1.4 | 55 | 30 | 27 |

EP 1 939 894 A1

33

Table 2

| | Resin solution | | Dispersion | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles (μm) | | | | | @1kHz | @1MHz |
| Example 23 | Epoxy resin (B-1) | 3 | A-2 | 150 | Barium titanate | 0.03 | 90 | 69 | 2 | 65 | 41 | 35 |
| Example 24 | Epoxy resin (B-1) | 3 | A-3 | 150 | Barium titanate | 0.022 | 90 | 69 | 2 | 70 | 37 | 32 |
| Example 25 | Epoxy resin (B-1) | 5.9 | A-5 | 150 | Barium titanate | 0.022 | 90 | 40 | 1.4 | 68 | 40 | 34 |
| Example 26 | Epoxy resin (B-1) | 3 | A-1 | 150 | Barium titanate | 0.06 | 90 | 80 | 1.4 | 51 | 48 | 41 |
| Example 27 | Epoxy resin (B-1) | 5 | A-6 | 76.5 | Barium titanate | 0.06 | 90 | 40 | 1.4 | 50 | 42 | 36 |
| Example 28 | Epoxy resin (B-1) | 189 | A-7 | 150 | Barium titanate | 0.05 | 20 | 69 | 1.4 | 82 | 10 | 8 |
| Example 29 | Epoxy resin (B-2) | 10.9 | A-3 | 150 | Barium titanate | 0.022 | 90 | 70 | 1.4 | 72 | 37 | 32 |

| | Resin solution | | Dispersion | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|
| | Type | Part by weight | Type | Part by weight | Kind of dielectric constant inorganic particle | Average particle diameter of high dielectric constant inorganic particles (μm) | | | | | @1kHz | @1MHz |
| Example 30 | Epoxy resin (B-3) | 4.9 | A-3 | 150 | Barium titanate | 0.022 | 90 | 69 | 1.4 | 75 | 34 | 28 |
| Comparative example 1 | Epoxy resin (B-4) | 45.6 | A-8 | 341.2 | Barium titanate | 0.05 | 94 | 11 | 10 | 8 | 87 | 80 |
| Comparative example 2 | Epoxy resin (B-5) | 10.7 | A-9 | 100 | Barium titanate | 0.05 0.059 | 95 | 20 | 10 | 5 | 138 | 123 |
| Comparative example 3 | Epoxy resin (B-6) | 1.9 | A-10 | 60 | Barium titanate | 0.01 | 90 | 69 | 1.4 | 28 | 40 | 34 |
| Comparative example 4 | Epoxy resin (B-1) | 5.9 | A-11 | 150 | Barium titanate | 0.06 | 90 | 30 | 2 | 35 | 47 | 40 |
| Comparative example 5 | Epoxy resin (B-1) | 3 | A-1 | 150 | Barium titanate | 0.06 | 90 | 90 | - | - | - | - |

Table 3

| | Resin solution | | Dispersion | | | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|---|---|
| | | | | | High dielectric constant inorganic particle | | Dispersant | | | | | | | | |
| | Type | Part by weight | Type | Part by weight | Kind | Average particle diameter (μm) | Model | Content of dispersant based on the amount of high dielectric constant inorganic particle (wt%) | | | | | @1kHz | @1MHz |
| Example 31 | Epoxy resin (B-7) | 8.2 | A-12 | 150 | Barium titanate | 0.027 | BYK-W9010 | 4 | 81 | 67 | 1.4 | 79 | 25 | 22 |
| Example 32 | Epoxy resin (B-17) | 6 | A-13 | 150 | Barium titanate | 0.027 | BYK-W9010 | 8 | 81 | 67 | 1.4 | 87 | 33 | 27 |
| Example 33 | Epoxy resin (B-7) | 2.9 | A-14 | 150 | Barium titanate | 0.027 | BYK-W9010 | 15 | 81 | 69 | 1.4 | 97 | 34 | 28 |
| Example 34 | Epoxy resin (B-1) | 3.4 | A-15 | 150 | Barium titanate | 0.012 | BYK-W9010 | 15 | 81 | 68 | 1.4 | 99 | 26 | 23 |

(continued)

| | Resin solution | | Dispersion | | | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|---|---|
| | | | | | High dielectric constant inorganic particle | | Dispersant | | | | | | | | |
| | Type | Part by weight | Type | Part by weight | Kind | Average particle diameter (μm) | Model | Content of dispersant based on the amount of high dielectric constant inorganic particle (wt%) | | | | | @1kHz | @1MHz |
| Example 35 | Epoxy resin (B-1) | 3.4 | A-16 | 150 | Barium titanate | 0.012 | BYK-11 | 15 | 81 | 68 | 1.4 | 99 | 26 | 23 |
| Example 36 | Epoxy resin (B-1) | 5.7 | A-17 | 150 | Barium titanate | 0.027 | BYK-W9010 | 15 | 81 | 48 | 4 | 97 | 34 | 29 |
| Example 37 | Epoxy resin (B-7) | 8.2 | A-18 | 150 | Barium titanate | 0.012 | BYK-W9010 | 4 | 81 | 67 | 1.4 | 78 | 18 | 16 |
| Example 38 | Epoxy resin (B-7) | 6.5 | A19 | 150 | Barium titanate | 0.012 | BYK-W9010 | 7 | 81 | 67 | 1.4 | 89 | 25 | 22 |

EP 1 939 894 A1

(continued)

| | Resin solution | | Dispersion | | | | | | Content of high dielectric constant inorganic particles (wt%) | Content of solvent based on the amount of paste composition (wt%) | Film thickness (μm) | Optical transmissivity at wavelength of 400 nm (%) | Relative dielectric constant | |
|---|---|---|---|---|---|---|---|---|---|---|---|---|---|---|
| | | | | | High dielectric constant inorganic particle | | Dispersant | | | | | | | | |
| | Type | Part by weight | Type | Part by weight | Kind | Average particle diameter (μm) | Model | Content of dispersant based on the amount of high dielectric constant inorganic particle (wt%) | | | | | | @1kHz | @1MHz |
| Example 39 | Epoxy resin (B-7) | 4.2 | A-20 | 150 | Barium titanate | 0.012 | BYK-W9010 | 20 | 75 | 68 | 1.4 | 99 | 25 | 22 |
| Example 40 | Epoxy resin (B-7) | 4 | A-21 | 150 | Barium titanate | 0.012 | BYK-W9010 | 25 | 72 | 68 | 1.4 | 99 | 21 | 18 |
| Example 41 | Epoxy resin (B-7) | 4 | A-22 | 150 | Barium titanate | 0.012 | BYK-W9010 | 28 | 70 | 67 | 1.4 | 99 | 11 | 9 |
| Example 42 | Epoxy resin (B-7) | 2.9 | A-23 | 150 | Barium titanate | 0.022 | BYK-W9010 | 15 | 81 | 69 | 1.4 | 96 | 21 | 18 |

Example 43

One thousand nine hundred and sixty parts by weight of γ-butyrolactone, 109.6 parts by weight of a dispersant (BYK-W9010, a copolymer with acid groups respectively having a phosphoric acid ester skeleton, produced by BYK Japan K. K.) and 730.4 parts by weight of barium titanate (T-BTO-020RF, average particle diameter 0.027 μm, produced by Toda Kogyo Corp.) were mixed in this order, to obtain dispersion A-24A. The vessel of Ultra Apex Mill UAM-015 (produced by Kotobuki Industries Co. , Ltd.) was packed with 0. 4 kg of zirconia balls (YTZ balls with a diameter of 0.5 mm produced by Nikkato Corp.), and while the rotor was rotated, the dispersion A-24A was fed and circulated through the vessel. The inspection report concerning the particle diameter of the zirconia balls (YTZ balls with a diameter of 0. 5 mm produced by Nikkato Corp.) states that the average particle diameter measured by the manufacturer is 0.537 mm. The rotor was rotated at a circumferential speed of 8 m/s for 1 hour for performing dispersion, to obtain dispersion A-24B. In the particle diameter distribution of the dispersion A-24B, the 50% size was 0.06 μm, and the 90% size was 0.22 μm. The beads in the vessel were recovered, and the vessel was newly packed with 0.4 kg of zirconia balls (YTZ balls with a diameter of 0.05 mm produced by Nikkato Corp.). The inspection report concerning the particle diameter of the zirconia balls (YTZ balls with a diameter of 0.5 mm produced by Nikkato Corp.) states that the average particle diameter measured by the manufacturer is 0.058 mm. After exchange of beads, while the rotor was rotated, the dispersion A-24B was fed and circulated through the vessel. The rotor was rotated a circumferential speed of 12 m/s to perform dispersion till the particle diameter distribution became $0.02 \pm 0.01$ μm, to obtain dispersion A-24C. In the particle diameter distribution of the dispersion A-24C, the 50% size was 0.022 μm, and the 90% size was 0.051 μm. Seventeen point five seven parts by weight of an epoxy resin {Epikote (trade name) YX8000 produced by Japan Epoxy Resin Co., Ltd.}, 12.13 parts by weight of a curing agent {RIKACID (trade name) MH700 produced by New Japan Chemical Co., Ltd.}, 0.3 part by weight of a curing accelerator (N,N-dimethylbenzylamine) and 12.13 parts by weight of γ-butyrolactone were mixed to obtain epoxy resin solution B-8. Fifteen parts by weight of the dispersion A-24C, 0.94 part by weight of the epoxy resin solution B-8 and 0.012 part by weight of a surfactant (BYK-333 produced by BYK Japan K. K.) were mixed using a ball mill, to prepare paste composition C-37 in which the organic solvent content based on the total amount of the paste composition was 67.7 wt%. The content of the high dielectric constant inorganic particles in the dielectric composition obtained by curing C-37 was 76 wt% based on the total amount of the dielectric composition.

The paste composition C-37 was filtered using a filter with a pore size of 0.45 μm, and a glass substrate with ITO was coated with it using a spin coater. The coating was heat-treated at 80°C for 15 minutes to be dried, using an oven, and subsequently heat-treated at 175°C for 4 hours to be cured, for obtaining a dielectric composition (cured film) with a film thickness of 1 μm. The film thickness was adjusted by adjusting the spinning speed at the time of spin coating. The dielectric composition had an optical transmissivity of 99% (wavelength 400 nm). The smallest value of the optical transmissivity in a wavelength range from 400 to 700 nm was 91% (wavelength 520 nm). The leak current value at an applied voltage of 2 V was 15 nA/cm$^2$, and the voltage holding ratio was 4%.

On the dielectric composition, an aluminum electrode was formed as a top electrode, to prepare a capacitor consisting of glass/ITO electrode/dielectric composition/aluminum electrode. The aluminum electrode was formed by vacuum evaporation through a mask. The relative dielectric constant of the capacitor at 1 kHz was 23.

Example 44

Two hundred and twenty point one eight parts by weight of an epoxy resin (NC3000 produced by Nippon Kayaku Co., Ltd.), 76.82 parts by weight of a curing agent {"KAYAHARD" (trade name) TPM produced by Nippon Kayaku Co., Ltd.}, 3 parts by weight of a curing accelerator (triphenylphosphine) and 76.82 parts by weight of γ-butyrolactone were mixed to obtain epoxy resin solution B-9. The NC3000 is an epoxy resin having biphenyl skeletons with an epoxy equivalent of 278 g/eq. Fifteen parts by weight of the dispersion A-24C, 8.74 parts by weight of the epoxy resin solution B-9 and 0.018 part by weight of a surfactant (BYK-333 produced by BYK Japan K.K.) were mixed using a ball mill, to prepare paste composition C-38 in which the organic solvent content based on the total amount of the paste composition was 52.6 wt%. The content of the high dielectric constant inorganic particles in the dielectric composition obtained by curing C-38 was 35 wt% based on the total amount of the dielectric composition. Evaluation was performed as described in Example 43, and the results are shown in Table 4.

Example 45

Fifteen parts by weight of the dispersion A-24C, 4.35 parts by weight of the epoxy resin solution B-9 and 0.016 part by weight of a surfactant (BYK-333 produced by BYK Japan K.K.) were mixed using a ball mill, to prepare paste composition C-39 in which the organic solvent content based on the total amount of the paste composition was 59.4 wt%. The content of the high dielectric constant inorganic particles in the dielectric composition obtained by curing C-39 was 50 wt% based on the total amount of the dielectric composition. Evaluation was performed as described in Example 43, and the results are shown in Table 4.

Example 46

Fifteen parts by weight of the dispersion A-24C, 1.13 parts by weight of the epoxy resin solution B-9 and 0.012 part by weight of a surfactant (BYK-333 produced by BYK Japan K.K.) were mixed using a ball mill, to prepare paste composition C-40 in which the organic solvent content based on the total amount of the paste composition was 66.7 wt%. The content of the high dielectric constant inorganic particles in the dielectric composition obtained by curing C-40 was 73 wt% based on the total amount of the dielectric composition. Evaluation was performed as described in Example 43, and the results are shown in Table 4.

Example 47

Fifteen parts by weight of the dispersion A-24C, 0.83 parts by weight of the epoxy resin solution B-9 and 0.012 part by weight of a surfactant (BYK-333 produced by BYK Japan K.K.) were mixed using a ball mill, to prepare paste composition C-41 in which the organic solvent content based on the total amount of the paste composition was 67.5 wt%. The content of the high dielectric constant inorganic particles in the dielectric composition obtained by curing C-41 was 76 wt% based on the total amount of the dielectric composition. Evaluation was performed as described in Example 43, and the results are shown in Table 4.

Example 48

Fifteen parts by weight of the dispersion A-24C, 0.44 part by weight of the epoxy resin solution B-9 and 0.012 part by weight of a surfactant (BYK-333 produced by BYK Japan K.K.) were mixed using a ball mill, to prepare paste composition C-42 in which the organic solvent content based on the total amount of the paste composition was 68.6 wt%. The content of the high dielectric constant inorganic particles in the dielectric composition obtained by curing C-42 was 81 wt% based on the total amount of the dielectric composition. Evaluation was performed as described in Example 43, and the results are shown in Table 4.

Example 49

In a dry nitrogen stream, 30.03 g (0.082 mole) of 2,2-bis(3-amino-4-hydroxyphenyl)hexafluoropropane (BAHF), 1.24 g (0.005 mole) of 1,3-bis(3-aminopropyl)tetramethyldisiloxane and 4.1 g (0.025 mole) of 3-hydroxyphthalic anhydride (produced by Tokyo Chemical Industry Co., Ltd.) as a terminal sealing agent were dissolved into 100 g of N-methyl-2-pyrrolidone (NMP). Into the solution, 31.02 g (0.1 mole) of bis(3,4-dicarboxyphenyl)ether dianhydride was added together with 30 g of NMP, and the mixture was stirred at 20°C for 1 hour, and subsequently stirred at 50°C for 4 hours, then being stirred at 180°C for 5 hours. After completion of stirring, the solution was put into 3 liters of water, and a white precipitate was collected. The precipitate was collected by filtration and washed with water 3 times, being dried by a vacuum dryer of 200°C for 5 hours. The infrared absorption spectrum of the obtained polymer powder was measured, and the absorption peak of the imide structure caused by a polyimide was detected near 1780 cm$^{-1}$ and near 1377 cm$^{-1}$. Then, 10 g of the polymer powder, 0.4 g of a photopolymerization initiator {1,2-octanedione-1-[4-(phenylthio)phenyl]-2-(o-benzoyloxime)}, 1.5 g of a thermally crosslinkable compound {NIKALAC MW-100LM (trade name) produced by Sanwa Chemical Co., Ltd.}, 0.3 g of a colorant {A-DMA (trade name) produced by Hodogaya Chemical Co., Ltd.}, 8 g of a compound having polymerizable unsaturated double bonds {PDBE-250 (trade name) produced by NOF Corp.} and 2 g of a compound having polymerizable unsaturated double bonds (dimethylol tricyclodecane diacrylate) were dissolved into 10 g of diacetone alcohol and 20.5 g of ethyl lactate, to obtain photosetting polyimide composition solution B-10.
Fifteen parts by weight of the dispersion A-24C and 1.23 parts by weight of the photosetting polyimide composition solution B-10 were mixed using a ball mill, to prepare paste composition C-43 in which the organic solvent content based on the total amount of the paste composition was 68.3 wt%. The content of the high dielectric constant inorganic particles in the dielectric composition obtained by curing C-43 was 76 wt% based on the total amount of the dielectric compound.
The paste composition C-43 was filtered using a filter with a pore size of 0.45 $\mu$m, and a glass substrate with ITO was coated with it using a spin coater. The coating was pre-baked at 120°C for 1 minute using a hot plate and subsequently exposed at an exposure value of 500 mJ/cm$^2$ (intensity at 365 nm) using an exposure device (PEM-6M produced by Union Optical Co., Ltd.). After completion of exposure, the coating was baked at 120°C for 1 minute and heat-treated at 200°C for 60 minutes in N$_2$ atmosphere using an inert oven, INL-60 produced by Koyo Thermo Systems Co., Ltd., to be cured, for obtaining a dielectric composition (cured film) with a film thickness of 1 $\mu$m. The film thickness was adjusted by adjusting the spinning speed at the time of spin coating. Evaluation was performed as described in Example 43, and the results are shown in Table 4.

Example 50

Fifteen parts by weight of the dispersion A-24C, 0.61 part by weight of an acrylic resin {"Aronix" (trade name) M305 produced by Toagosei Co. , Ltd.}, 0.03 part by weight of a photopolymerization initiator {"IRGACURE" (trade name) 184 produced by Ciba-Geigy K. K.} and 0.19 part by weight of γ-butyrolactone were mixed using a ball mill, to prepare paste composition C-44 in which the organic solvent content based on the total amount of the paste composition was 67.5 wt%. The content of the high dielectric constant inorganic particles in the dielectric composition obtained by curing C-44 was 76 wt% based on the total amount of the dielectric composition.

The paste composition C-44 was filtered using a filter with a pore size of 0.45 μm, and a glass substrate with ITO was coated with it using a spin coater. The coating was pre-baked at 80°C for 10 minutes using a hot plate and subsequently exposed at an exposure value of 2000 mJ/cm$^2$ (intensity at 365 nm) using an exposure device (PEM-6M produced by Union Optical Co., Ltd.), to be cured, for obtaining a dielectric composition (cured film) with a film thickness of 1 μm. The film thickness was adjusted by adjusting the spinning speed at the time of spin coating. Evaluation was performed as described in Example 43, and the results are shown in Table 4.

Example 51

Two hundred and eight point five parts by weight of an epoxy resin (NC3000 produced by Nippon Kayaku Co., Ltd.), 88.5 parts by weight of a curing agent {"Phenolite" (trade name) VH4150 produced by Dainippon Ink and Chemicals, Incorporated}, 3 parts by weight of a curing accelerator (triphenylphosphine) and 88.50 parts by weight of γ-butyrolactone were mixed to obtain epoxy resin solution B-11. The "Phenolite" VH-4150 is a phenol-based novolak resin. Fifteen parts by weight of the dispersion A-24C, 0.86 parts by weight of the epoxy resin solution B-11 and 0.012 part by weight of a surfactant (BYK-333 produced by BYK Japan K.K.) were mixed using a ball mill, to prepare paste composition C-45 in which the organic solvent content based on the paste composition was 67.6 wt%. The content of the high dielectric constant inorganic particles in the dielectric composition obtained by curing C-45 was 76 wt% based on the total amount of the dielectric composition. Evaluation was performed as described in Example 43, and the results are shown in Table 4.

Comparative Example 6

Eight hundred and forty parts by weight of γ-butyrolactone, 255.65 parts by weight of a dispersant (BYK-W9010, a copolymer with acid groups respectively having a phosphoric acid ester skeleton, produced by BYK Japan K.K.) and 1704.35 parts by weight of barium titanate (T-BTO-020RF, average particle diameter 0. 027 μm, produced by Toda Kogyo Corp.) were mixed in this order, and further mixed using a homogenizer, to obtain dispersion A-25A. The cup of the homogenizer had been packed with 1.7 kg of zirconia balls (YTZ balls with a diameter of 0.5 mm produced by Nikkato Corp.). The vessel of Ultra Apex Mill UAM-015 (produced by Kotobuki Industries Co., Ltd.) was packed with 0.4 kg of zirconia balls (YTZ balls with a diameter of 0. 05 mm produced by Nikkato Corp.), and while the rotor was rotated, the dispersion A-25A was fed and circulated through the vessel. The rotor was rotated at a circumferential speed of 12 m/s for 2 hours for performing dispersion, to obtain dispersion A-25B. The dispersion A-25B was high in viscosity, and the separation between the beads and the dispersion in the vessel was insufficient. So, a filter with a pore size of 10 μm was further used for filtration, to obtain dispersion A-25C. In the particle diameter distribution of the dispersion A-25C, the 50% size was 0. 102 μm, and the 90% size was 0. 254 μm. It was difficult to disperse to near the primary particle diameter. Fifteen parts by weight of the dispersion A-25C, 2.62 parts by weight of the epoxy resin solution B-9 and 0.008 part by weight of a surfactant (BYK-333 produced by BYK Japan K. K.) were mixed using a ball mill, to prepare paste composition C-46 in which the organic solvent content based on the total amount of the paste composition was 28.9 wt%. The content of the dielectric constant inorganic particles in the dielectric composition obtained by curing C-46 was 73 wt% based on the total amount of the dielectric composition.

The paste composition C-46 could not be filtered by a filter with a pore size of 0.45 μm. The paste composition C-46 was filtered using a filter with a pore size of 2 μm instead of the filter with a pore size of 0.45 μm, and subsequently a glass substrate with ITO was coated with it using a spin coater. The coating was heat-treated at 80°C for 15 minutes to be dried, using an oven, and subsequently heat-treated at 175°C for 4 hours to be cured, for obtaining a dielectric composition (cured film) with a film thickness of 1 μm. The film thickness was adjusted by adjusting the spinning speed at the time of spin coating. Evaluation was performed as described in Example 43, and the results are shown in Table 4.

Example 52

One thousand one hundred and twenty parts by weight of γ-butyrolactone, 219.13 parts by weight of a dispersant (BYK-W9010, a copolymer with acid groups respectively having a phosphoric acid ester skeleton, produced by BYK Japan K.K.) and 1460.87 parts by weight of barium titanate (T-BTO-020RF, average particle diameter 0.027 µm, produced by Toda Kogyo Corp.) were mixed in this order, and further mixed using a homogenizer, to obtain dispersion A-26A. The cup of the homogenizer had been packed with 1.46 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia balls (YTZ balls with a diameter of 0.05 mm produced by Nikkato Corp.), and while the rotor was rotated, the dispersion A-26A was fed and circulated through the vessel. The rotor was rotated at a circumferential speed of 12 m/s for 2 hours for performing dispersion, to obtain dispersion A-26B. In the particle diameter distribution of the dispersion A-26B, the 50% size was 0.045 µm, and the 90% size was 0.104 µm. Fifteen parts by weight of the dispersion A-26B, 2.25 parts by weight of the epoxy resin solution B-9 and 0.01 part by weight of a surfactant (BYK-333 produced by BYK Japan K. K.) were mixed using a ball mill, to prepare paste composition C-47 in which the organic solvent content based on the total amount of the paste composition was 37.8 wt%. The content of the high dielectric constant inorganic particles in the dielectric composition obtained by curing C-47 was 73 wt% based on the total amount of the dielectric composition. Evaluation was performed as described in Example 43, and the results are shown in Table 4.

Example 53

One thousand four hundred parts by weight of γ-butyrolactone, 182.6 parts by weight of a dispersant (BYK-W9010, a copolymer with acid groups respectively having a phosphoric acid ester skeleton, produced by BYK Japan K.K.) and 1217.4 parts by weight of barium titanate (T-BTO-020RF, average particle diameter 0. 027 µm, produced by Toda Kogyo Corp.) were mixed in this order, and further mixed using a homogenizer, to obtain dispersion A-27A. The cup of the homogenizer had been packed with 1.2 kg of zirconia balls (YTZ balls with a diameter of 0. 5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia (YTZ balls with a diameter of 0.05 mm produced by Nikkato Corp.), and while the rotor was rotated, the dispersion A-26A was fed and circulated through the vessel. The rotor was rotated at a circumferential speed of 12 m/s for 2 hours for performing dispersion, to obtain dispersion A- 27B. In the particle diameter distribution of the dispersion A-27B, the 50% size was 0.038 µm, and the 90% size was 0.08 µm. Fifteen parts by weight of the dispersion A-27B, 1.88 parts by weight of the epoxy resin solution B-9 and 0.01 g by weight of a surfactant (BYK-333 produced by BYK Japan K.K.) were mixed using a ball mill, to prepare paste composition C-48 in which the organic solvent content based on the total amount of the paste composition was 47 wt%. The content of the high dielectric constant inorganic particles in the dielectric composition obtained by curing C-48 was 73 wt% based on the total amount of the dielectric composition. Evaluation was performed as described in Example 43, and the results are shown in Table 4.

Example 54

Two thousand and two hundred and forty parts by weight of γ-butyrolactone, 73.04 parts by weight of a dispersant (BYK-W9010, a copolymer with acid groups respectively having a phosphoric acid ester skeleton, produced by BYK Japan K.K.) and 486.96 parts by weight of barium titanate (T-BTO-020RF, average particle diameter 0.027 µm, produced by Toda Kogyo Corp.) were mixed in this order, and further mixed using a homogenizer, to obtain dispersion A-28A. The cup of the homogenizer had been packed with 0.5 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia balls (YTZ balls with a diameter of 0.05 mm produced by Nikkato Corp.), and while the rotor was rotated, the dispersion A-28A was fed and circulated through the vessel. The rotor was rotated at a circumferential speed of 12 m/s for 2 hours for performing dispersion, to obtain dispersion A-28B. In the particle diameter distribution of the dispersion A-28B, the 50% size was 0.021 µm, and the 90% size was 0.05 µm. Fifteen parts by weight of the dispersion A-28B, 0.75 part by weight of the epoxy resin solution B-9 and 0.014 part by weight of a surfactant (BYK-333 produced by BYK Japan K.K.) were mixed using a ball mill, to prepare paste composition C-49 in which the organic solvent content based on the total amount of the paste composition was 77.3 wt%. The content of the high dielectric constant inorganic particles in the dielectric composition obtained by curing C-49 was 73 wt% based on the total amount of the dielectric composition. Evaluation was performed as described in Example 43, and the results are shown in Table 4.

Comparative Example 7

Two thousand five hundred and twenty parts by weight of γ-butyrolactone, 36.52 parts by weight of a dispersant (BYK-W9010, a copolymer with acid groups respectively having a phosphoric acid ester skeleton, produced by BYK Japan K. K.) and 243.5 parts by weight of barium titanate (T-BTO-020RF, average particle diameter 0.027 $\mu$m, produced by Toda Kogyo Corp.) were mixed in this order, and further mixed using a homogenizer, to obtain dispersion A-29A. The cup of the homogenizer had been packed with 0.24 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia balls (YTZ balls with a diameter of 0.05 mm produced by Nikkato Corp.), and while the rotor was rotated, the dispersion A-29A was fed and circulated through the vessel. The rotor was rotated at a circumferential speed of 12 m/s for 2 hours for performing dispersion, to obtain dispersion A-29B. In the particle diameter distribution of the dispersion A-29B, the 50% size was 0. 021 $\mu$m, and the 90% size was 0.051 $\mu$m. Fifteen parts by weight of the dispersion A-29B, 0.38 part by weight of the epoxy resin solution B-9 and 0.014 part by weight of a surfactant (BYK-333 produced by BYK Japan K. K.) were mixed using a ball mill, to prepare paste composition C-50 in which the organic solvent content based on the total amount of the paste composition was 88.4 wt%. The content of the high dielectric constant inorganic particles in the dielectric composition obtained by curing C-50 was 73 wt% based on the total amount of the dielectric composition.

The paste composition C-50 was used to obtain a dielectric composition (cured film) as described in Example 43, but since the viscosity was low, a cured film with a thickness of 1 $\mu$m or more could not be obtained. The film thickness was 0.3 $\mu$m. Evaluation was performed as described in Example 43. The leak current value at an applied voltage of 2 V was more than 20 mA, and could not be measured, since it exceeded the upper limit of the current that could be measured by the measuring instrument. The relative dielectric constant could not be measured, since the leak current was large. The voltage holding ratio of the dielectric composition was 0%. The results are shown in Table 4.

Example 55

Fifteen parts by weight of the dispersion A-24B, 1.13 parts by weight of the epoxy resin solution B-9 and 0.012 part by weight of a surfactant (BYK-333 produced by BYK Japan K.K.) were mixed using a ball mill, to prepare paste composition C-51 in which the organic solvent content based on the total amount of the paste composition was 66.7 wt%. The content of the high dielectric constant inorganic particles in the dielectric composition obtained by curing C-51 was 73 wt% based on the total amount of the dielectric composition.

The paste composition C-51 was filtered using a filter with a pore size of 0.45 $\mu$m, but filtration was difficult since clogging occurred immediately. The paste composition C-51 was filtered using a filter with a pore size of 2 $\mu$m instead of using the filter with a pore size of 0.45 $\mu$m, and as described in Example 43, a dielectric composition (cured film) with a film thickness of 1 $\mu$m was obtained. Evaluation was performed as described in Example 43, and the results are shown in Table 5.

Example 56

One thousand nine hundred and sixty parts by weight of $\gamma$-butyrolactone, 140 parts by weight of a dispersant (BYK-W9010, a copolymer with acid groups respectively having a phosphoric acid ester skeleton, produced by BYK Japan K. K.) and 700 parts by weight of barium titanate (T-BTO-010RF, average particle diameter 0.012 $\mu$m, produced by Toda Kogyo Corp.) were mixed in this order, and further mixed using a homogenizer, to obtain dispersion A-30A. The cup of the homogenizer had been packed with 0.7 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia balls (YTZ balls with a diameter of 0.05 mm produced by Nikkato Corp.), and while the rotor was rotated, the dispersion A-30A was fed and circulated through the vessel. The rotor was rotated at a circumferential speed of 12 m/s for 2 hours for performing dispersion, to obtain dispersion A-30B. In the particle diameter distribution of the dispersion A-30B, the 50% size was 0.013 $\mu$m, and the 90% size was 0.037 $\mu$m. Fifteen parts by weight of the dispersion A-30B, 0.84 part by weight of the epoxy resin solution B-9 and 0.012 part by weight of a surfactant (BYK-333 produced by BYK Japan K. K.) were mixed using a ball mill, to prepare paste composition C-52 in which the organic solvent content based on the total amount of the paste composition was 67.5 wt%. The content of the high dielectric constant inorganic particles in the dielectric composition obtained by curing C-52 was 73 wt% based on the total amount of the dielectric composition. Evaluation was performed as described in Example 43, and the results are shown in Table 5.

Example 57

One thousand nine hundred and sixty parts by weight of $\gamma$-butyrolactone, 109. 6 parts by weight of a dispersant (BYK-W9010, a copolymer with acid groups respectively having a phosphoric acid ester skeleton, produced by BYK Japan K. K.) and 730.4 parts by weight of barium titanate (T-BTO-030RF, average particle diameter 0.03 $\mu$m, produced by Toda Kogyo Corp.) were mixed in this order, and further mixed using a homogenizer, to obtain dispersion A-31A.

The cup of the homogenizer had been packed with 0.73 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0. 4 kg of zirconia balls (YTZ balls with a diameter of 0. 05 mm produced by Nikkato Corp.), and while the rotor was rotated, the dispersion A-31A was fed and circulated through the vessel. The rotor was rotated at a circumferential speed of 12 m/s for 2 hours for performing dispersion, to obtain dispersion A-31B. In the particle diameter distribution of the dispersion A-31B, the 50% size was 0.048 $\mu$m, and the 90% size was 0.082 $\mu$m. Fifteen parts by weight of the dispersion A-31B, 1. 13 part by weight of the epoxy resin solution B-9 and 0.012 part by weight of a surfactant (BYK-333 produced by BYK Japan K. K.) were mixed using a ball mill, to prepare paste composition C-53 in which the organic solvent content based on the total amount of the paste composition was 66.7 wt%. The content of the high dielectric constant inorganic particles in the dielectric composition obtained by curing C-53 was 73 wt% based on the total amount of the dielectric composition. Evaluation was performed as described in Example 43, and the results are shown in Table 5.

Example 58

One thousand nine hundred and sixty parts by weight of $\gamma$-butyrolactone, 24.5 parts by weight of a dispersant (BYK-W9010, a copolymer with acid groups respectively having a phosphoric acid ester skeleton, produced by BYK Japan K. K.) and 815.5 parts by weight of barium titanate (K-Plus16, average diameter 0.06 $\mu$m, produced by Cabot, Inc.) were mixed in this order, and further mixed using a homogenizer, to obtain dispersion A-32A. The cup of the homogenizer had been packed with 0.815 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co. , Ltd.) was packed with 0.4 kg of zirconia balls (YTZ balls with a diameter of 0.05 mm produced by Nikkato Corp.), and while the rotor was rotated, the dispersion A-32A was fed and circulated through the vessel. The rotor was rotated at a circumferential speed of 12 m/s for 2 hours for performing dispersion, to obtain dispersion A-32B. In the particle diameter distribution of the dispersion A-32B, the 50% size was 0.15 $\mu$m, and the 90% size was 0.27 $\mu$m. Fifteen parts by weight of the dispersion A-32B, 1.14 parts by weight of the epoxy resin solution B-9 and 0.012 part by weight of a surfactant (BYK-333 produced by BYK Japan K.K.) were mixed using a ball mill, to prepare paste composition C-54 in which the organic solvent content based on the total amount of the paste composition was 66.5 wt%. The content of the high dielectric constant inorganic particles in the dielectric composition obtained by curing C-54 was 73 wt% based on the total amount of the dielectric composition. Evaluation was performed as described in Example 43, and the results are shown in Table 5.

Example 59

The dispersion A-30B was centrifuged, and the supernatant portion only was extracted to obtain dispersion A-30C. For the centrifugation, "S55A Angle Rotor" (trade name) produced by Hitachi High-Technologies Corporation was set in a small ultracentrifuge, "Himac CS100GXL" (trade name) produced by the same manufacturer, and the ultracentrifuge was operated at 50000 rpm for treatment for 10 minutes. Further, a rotary evaporator was used to concentrate the dispersion A-30C, to obtain dispersion A-30D. In the particle diameter distribution of the dispersion A-30D, the 50% size was 0.008 $\mu$m, and the 90% size was 0.019 $\mu$m. Fifteen parts by weight of the dispersion A-30D, 0.84 part by weight of the epoxy resin solution B-9 and 0.012 part by weight of a surfactant (BYK-333 produced by BYK Japan K. K.) were mixed using a ball mill, to prepare paste composition C-55 in which the organic solvent content based on the total amount of the paste composition was 67.5 wt%. The content of the high dielectric constant inorganic particles in the dielectric composition obtained by curing C-55 was 73 wt% based on the total amount of the dielectric composition. Evaluation was performed as described in Example 43, and the results are shown in Table 5.

Example 60

One thousand nine hundred and sixty parts by weight of $\gamma$-butyrolactone, 109.6 parts by weight of a dispersant (BYK-W9010, a copolymer with acid groups respectively having a phosphoric acid ester skeleton, produced by BYK Japan K. K.) and 730. 4 parts by weight of barium titanate (T-BTO-040RF, average particle diameter 0.04 $\mu$m, produced by Toda Kogyo Corp.) were mixed in this order, and further mixed using a homogenizer, to obtain dispersion A-33A. The cup of the homogenizer had been packed with 0.73 kg of zirconia balls (YTZ balls with a diameter of 0.5 mm produced by Nikkato Corp.), and treatment was performed in an ice bath. The vessel of Ultra Apex Mill UAM-015 (produced by Kotobuki Industries Co., Ltd.) was packed with 0.4 kg of zirconia balls (YTZ balls with a diameter of 0.05 mm produced by Nikkato Corp.), and while the rotor was rotated, the dispersion A-33A was fed and circulated through the vessel. The rotor was rotated at a circumferential speed of 12 m/s for 2 hours for performing dispersion, to obtain dispersion A-33B. In the particle diameter distribution of the dispersion A-33B, the 50% size was 0.049 $\mu$m, and the 90% size was 0.092 $\mu$m.

Fifteen parts by weight of the dispersion A-33B, 1.13 parts by weight of the epoxy resin solution B-9 and 0.012 part by weight of a surfactant (BYK-333 produced by BYK Japan K.K.) were mixed using a ball mill, to prepare paste composition C-56 in which the organic solvent content based on the total amount of the paste composition was 66.7 wt%. The content of the high dielectric constant inorganic particles in the dielectric composition obtained by curing C-56 was 73 wt% based on the total amount of the dielectric composition. Evaluation was performed as described in Example 43, and the results are shown in Table 5.

Comparative Example 8

One thousand nine hundred and sixty parts by weight of γ-butyrolactone, 8.3 parts by weight of a dispersant (BYK-W9010, a copolymer with acid groups respectively having a phosphoric acid ester skeleton, produced by BYK Japan K. K.) and 831.7 parts by weight of barium titanate (T-BTO-020RF, average particle diameter 0.027 $\mu$m, produced by Toda Kogyo Corp.) were mixed in this order, to obtain dispersion A-34A. The dispersion A-34A was so high in viscosity that it was not in a state to allow dispersion by beads. So, it was diluted with γ-butyrolactone, and the diluted dispersion was dispersed using a homogenizer, to obtain dispersion A-34C. In the particle diameter distribution of the dispersion A-34C, the 50% size was 0.56 $\mu$m, and the 90% size was 1.3 $\mu$m. The dispersion A-34C and the epoxy resin solution B-9 were mixed, to obtain paste composition C-57 in which the content of the high dielectric constant inorganic particles in the dielectric composition obtained by curing was 73 wt% based on the total amount of the dielectric composition. The organic solvent content based on the total amount of the paste composition C-57 was 88%.

The paste composition C-57 could not be filtered using a filter with a pore size 2 $\mu$m. A glass substrate with ITO was coated with the paste composition C-57 using a spin coater, and the coating was heat-treated at 80°C for 15 minutes to be dried, using an oven, and subsequently heat-treated at 175°C for 4 hours to be cured, for obtaining a dielectric composition film. The smallest value of the optical transmissivity of the dielectric composition in a wavelength range from 400 to 700 nm was different greatly from measuring site to measuring site and ranged from 5 to 10%. Further, the leak current value at an applied voltage of 2 V was more than 20 mA, and since it exceeded the upper limit of the current that could be measured by the measuring instrument, it could not be measured. The relative dielectric constant could not be measured since the leak current was large. The voltage holding ratio of the dielectric composition was 0%.

Example 61

One thousand nine hundred and sixty parts by weight of γ-butyrolactone, 62.22 parts by weight of a dispersant (BYK-W9010, a copolymer with acid groups respectively having a phosphoric acid ester skeleton, produced by BYK Japan K.K.) and 777.78 parts by weight of barium titanate (T-BTO-020RF, average particle diameter 0.027 $\mu$m, produced by Toda Kogyo Corp.) were mixed in this order, to obtain dispersion A-35A. The vessel of Ultra Apex Mill UAM-015 (produced by Kotobuki Industries Co., Ltd.) was packed with 0.4 kg of zirconia balls (YTZ balls with a diameter of 0.5 mm produced by Nikkato Corp.), and while the rotor was rotated, the dispersion A-35A was fed and circulated through the vessel. The rotor was rotated at a circumferential speed of 8 m/s for 1 hour for performing dispersion, to obtain dispersion A-35B. The beads in the vessel were recovered, and the vessel was newly packed with 0.4 kg of zirconia balls (YTZ balls with a diameter of 0.05 mm produced by Nikkato Corp.). After exchange of beads, while the rotor was rotated, the dispersion A-35B was fed and circulated through the vessel. The rotor was rotated at a circumferential speed of 12 m/s for 90 minutes for performing dispersion, to obtain dispersion A-35C. Further, dispersion was performed for 120 minutes, to obtain dispersion A-35D. In the particle diameter distribution of the dispersion A-35C, the 50% size was 0.027 $\mu$m, and the 90% size was 0.061 $\mu$m. In the particle diameter distribution of the dispersion A-35D, the 50% size was 0.035 $\mu$m, and the 90% size was 0.074 $\mu$m. It was confirmed that since the amount of the dispersant was smaller than that in Example 46, the particle diameter increased by performing dispersion for a longer time. Fifteen parts by weight of the dispersion A-35C, 1.56 parts by weight of the epoxy resin solution B-9 and 0.012 part by weight of a surfactant (BYK-333 produced by BYK Japan K.K.) were mixed using a ball mill, to prepare paste composition C-58 in which the organic solvent content based on the total amount of the paste composition was 65.5 wt%. The content of the high dielectric constant inorganic particles in the dielectric composition obtained by curing C-58 was 73 wt% based on the total amount of the dielectric composition. Evaluation was performed as described in Example 43, and the results are shown in Table 5.

Example 62

One thousand nine hundred and sixty parts by weight of γ-butyrolactone, 140 parts by weight of a dispersant (BYK-W9010, a copolymer with acid groups respectively having a phosphoric acid ester skeleton, produced by BYK Japan K.K.) and 700 parts by weight of barium titanate (T-BTO-020RF, average particle diameter 0.027 $\mu$m, produced by Toda Kogyo Corp.) were mixed in this order, to obtain dispersion A-36A. The vessel of Ultra Apex Mill UAM-015 (produced by Kotobuki Industries Co. , Ltd.) was packed with 0.4 kg of zirconia balls (YTZ balls with a diameter of 0. 5 mm produced by Nikkato Corp.), and while the rotor was rotated, the dispersion A-36A was fed and circulated through the vessel. The rotor was rotated at a circumferential speed of 8 m/s for 1 hour for performing dispersion, to obtain dispersion A-36B. The beads in the vessel were recovered, and the vessel was newly packed with 0.4 kg of zirconia balls (YTZ balls with a diameter of 0.05 mm produced by Nikkato Corp.). After exchange of beads, while the rotor was rotated, the dispersion A-36B was fed and circulated through the vessel. The rotor was rotated at a circumferential speed of 12 m/s for 120 minutes for performing dispersion, to obtain dispersion A-36C. In the particle diameter distribution of the dispersion A-36C, the 50% size was 0.021 $\mu$m, and the 90% size was 0.049 $\mu$m. Fifteen parts by weight of the dispersion A-36C, 0.84 part by weight of the epoxy resin solution B-9 and 0.012 part by weight of a surfactant (BYK-333 produced by BYK Japan K.K.) were mixed using a ball mill, to prepare paste composition C-59 in which the organic solvent content based on the total amount of the paste composition was 67.5 wt%. The content of the high dielectric constant inorganic particles in the dielectric composition obtained by curing C-59 was 73 wt% based on the total amount of the dielectric composition. Evaluation was performed as described in Example 43, and the results are shown in Table 5.

Example 63

One thousand nine hundred and sixty parts by weight of $\gamma$-butyrolactone, 183. 75 parts by weight of a dispersant (BYK-W9010, a copolymer with acid groups respectively having a phosphoric acid ester skeleton, produced by BYK Japan K.K.) and 656.25 parts by weight of barium titanate (T-BTO-020RF, average particle diameter 0.027 $\mu$m, produced by Toda Kogyo Corp.) were mixed in this order, to obtain dispersion A-37A. The vessel of Ultra Apex Mill UAM-015 (produced by Kotobuki Industries Co., Ltd.) was packed with 0.4 kg of zirconia balls (YTZ balls with a diameter of 0.5 mm produced by Nikkato Corp.), and while the rotor was rotated, the dispersion A-37A was fed and circulated through the vessel. The rotor was rotated at a circumferential speed of 8 m/s for 1 hour for performing dispersion, to obtain dispersion A-37B. The beads in the vessel were recovered, and the vessel was newly packed with 0.4 kg of zirconia balls (YTZ balls with a diameter of 0.5 mm produced by Nikkato Corp.). After exchange of beads, while the rotor was rotated, the dispersion A-37B was fed and circulated through the vessel. The rotor was rotated at a circumferential speed of 12 m/s for 120 minutes for performing dispersion, to obtain dispersion A-37C. In the particle diameter distribution of the dispersion A-37C, the 50% size was 0.02 $\mu$m, and the 90% size was 0.047 $\mu$m. Fifteen parts by weight of the dispersion A-37C, 0.42 part by weight of the epoxy resin solution B-9 and 0.012 part by weight of a surfactant (BYK-333 produced by BYK Japan K.K.) were mixed using a ball mill, to prepare paste composition C-60 in which the organic solvent content based on the total amount of the paste composition was 68.7 wt%. The content of the high dielectric constant inorganic particles in the dielectric composition obtained by curing C-60 was 73 wt% based on the total amount of the dielectric composition. Evaluation was performed as described in Example 43, and the results are shown in Table 5.

Example 64

Fifteen parts by weight of the dispersion A-24C, 6.43 parts by weight of an acrylic resin {"Aronix" (trade name) M305 produced by Toagosei Co. , Ltd.}, 0.32 part by weight of a photopolymerization initiator {IRGACURE (trade name) 184 produced by Chiba Geigy K. K. } and 1.99 parts by weight of $\gamma$-butyrolactone were mixed using a ball mill, to prepare paste composition C-61 in which the organic solvent content based on the total amount of the paste composition was 52.6 wt%. The content of the high dielectric constant inorganic particles in the dielectric composition obtained by curing C-61 was 35 wt% based on the total amount of the dielectric composition. Evaluation was performed as described in Example 50, and the results are shown in Table 5.

Example 65

Fifteen parts by weight of the dispersion A-24C, 3.2 parts by weight of an acrylic resin {"Aronix" (trade name) M305 produced by Toagosei Co. , Ltd.}, 0.16 part by weight of a photopolymerization initiator {IRGACURE (trade name) 184 produced by Chiba Geigy K. K.} and 0.99 parts by weight of $\gamma$-butyrolactone were mixed using a ball mill, to prepare paste composition C-62 in which the organic solvent content based on the total amount of the paste composition was 59.4 wt%. The content of the high dielectric constant inorganic particles in the dielectric composition obtained by curing C-62 was 50 wt% based on the total amount of the dielectric composition. Evaluation was performed as described in Example 50, and the results are shown in Table 5.

Example 66

Fifteen parts by weight of the dispersion A-24C, 0.83 parts by weight of an acrylic resin {"Aronix" (trade name) M305 produced by Toagosei Co. , Ltd.}, 0.04 part by weight of a photopolymerization initiator {IRGACURE (trade name) 184 produced by Chiba Geigy K. K. } and 0.26 parts by weight of γ-butyrolactone were mixed using a ball mill, to prepare paste composition C-63 in which the organic solvent content based on the total amount of the paste composition was 66.7 wt%. The content of the high dielectric constant inorganic particles in the dielectric composition obtained by curing C-63 was 73 wt% based on the total amount of the dielectric composition. Evaluation was performed as described in Example 50, and the results are shown in Table 5.

Example 67

One thousand nine hundred and sixty parts by weight of ethyl lactate, 109.6 parts by weight of a dispersant (BYK-W9010, a copolymer with acid groups respectively having a phosphoric acid ester skeleton, produced by BYK Japan K. K.) and 730. 4 parts by weight of barium titanate (T-BTO-020RF, average particle diameter 0.027 μm, produced by Toda Kogyo Corp.) were mixed in this order, to obtain dispersion A-38A. The vessel of Ultra Apex Mill UAM-015 (produced by Kotobuki Industries Co., Ltd.) was packed with 0. 4 kg of zirconia balls (YTZ balls with a diameter of 0. 5 mm produced by Nikkato Corp.), and while the rotor was rotated, the dispersion A-38A was fed and circulated through the vessel. The rotor was rotated at a circumferential speed of 8 m/s for 1 hour for performing dispersion, to obtain dispersion A-38B. The beads in the vessel were recovered, and the vessel was newly packed with 0.4 kg of zirconia balls (YTZ balls with a diameter of 0.05 mm produced by Nikkato Corp.). After exchange of beads, while the rotor was rotated, the dispersion A-38B was fed and circulated through the vessel. The rotor was rotated at a circumferential speed of 12 m/s for performing dispersion till the particle diameter distribution reached $0. 02 \pm 0.01$ μm, to obtain dispersion A-38C. In the particle diameter distribution of the dispersion A-38C, the 50% size was 0.022 μm, and the 90% size was 0.049 μm.

Fifteen parts by weight of the dispersion A-38C, 1.13 parts by weight of the epoxy resin solution B-9 and 0.012 part by weight of a surfactant (BYK-333 produced by BYK Japan K.K.) were mixed using a ball mill, to prepare paste composition C-64 in which the organic solvent content based on the total amount of the paste composition was 66.7 wt%. The content of the high dielectric constant inorganic particles in the dielectric composition obtained by curing C-64 was 73 wt% based on the total amount of the dielectric composition. Evaluation was performed as described in Example 50, and the results are shown in Table 7.

Example 68

The paste composition C-64 was filtered using a filter with a pore size of 0.45 μm, and a glass substrate with ITO was coated with it using a spin coater. The coating was heat-treated at 80°C for 15 minutes to be dried, using an oven, and subsequently heat-treated at 175°C for 4 hours to be cured, for forming a dielectric composition (cured film) with a film thickness of 1 μm. The film thickness was adjusted by adjusting the spinning speed at the time of spin coating. Further, on the dielectric composition, a 0.1 μm thick transparent film was formed using a fluorine-based surfactant {"Defenser" (trade name) MCF-350SF produced by Dainippon Ink and Chemicals, Incorporated}. Evaluation was performed as described in Example 43, and the results are shown in Table 7.

Table 4

| | Resin solution | | Diepersion | | | | | | | | Content of high dielectric constant inorganic particles (wt%) | Content of solvent based on the amount of paste composition (wt%) | Film thickness (μm) | Optical transmissivity at wavelength of 400 nm (%) | Optical transmissivity at wavelength of 400 to 700 nm | | Leak current value (nA/cm²) @2V | Voltage holding ratio (%) | Relative dielectric constant @1kHz |
| | Type | Part by weight | Type | Method of dispersion *1 | Solid concentration (wt%) | Part by weight | Inorganic particle | Dispersant | Particle size distribution | | | | | | | Minimum value of optical transmissivity (%) | Wavelength (nm) | | | |
| | | | | | | | Average particle diameter (μm) | Content of dispersant based on the amount of inorganic particles (wt%) | 50% diameter (μm) | 90% diameter (μm) | | | | | | | | | | |
| Example 43 | Epoxy resin (B-8) | 0.94 | A-24C | U/0.5mm U/0.05mm | 30 | 15 | 0.027 | 15 | 0.022 | 0.051 | 76 | 67.7 | 1 | 99 | 91 | 520 | 15 | 4 | 23 |
| Example 44 | Epoxy resin (B-9) | 8.74 | A-24C | U/0.5mm U/0.05mm | 30 | 15 | 0.027 | 15 | 0.022 | 0.051 | 35 | 52.6 | 1 | 99 | 95 | 520 | 0.3 | 97 | 5 |
| Example 45 | Epoxy resin (B-9) | 4.35 | A-24C | U/0.5mm U/0.05mm | 30 | 15 | 0.027 | 15 | 0.022 | 0.051 | 50 | 59.4 | 1 | 99 | 94 | 520 | 0.3 | 94 | 7 |
| Example 46 | Epoxy resin (B-9) | 1.13 | A-24C | U/0.5mm U/0.05mm | 30 | 15 | 0.027 | 15 | 0.022 | 0.051 | 73 | 66.7 | 1 | 99 | 91 | 520 | 1.1 | 66 | 15 |
| Example 47 | Epoxy resin (B-9) | 0.83 | A-24C | U/0.5mm U/0.05mm | 30 | 15 | 0.027 | 15 | 0.022 | 0.051 | 76 | 67.5 | 1 | 98 | 90 | 520 | 5 | 26 | 18 |
| Example 48 | Epoxy resin (B-9) | 0.44 | A-24C | U/0.5mm U/0.05mm | 30 | 15 | 0.027 | 15 | 0.022 | 0.051 | 81 | 68.6 | 1 | 97 | 89 | 520 | 40 | 14 | 32 |
| Example 49 | photosetting pokyimide resin (B-10) | 1.23 | A-24C | U/0.5mm U/0.05mm | 30 | 15 | 0.027 | 15 | 0.022 | 0.051 | 76 | 68.3 | 1 | 98 | 90 | 530 | 20 | 23 | 16 |
| Example 50 | Acryl resin | 0.61 | A-24C | U/0.5mm U/0.05mm | 30 | 15 | 0.027 | 15 | 0.022 | 0.051 | 76 | 67.5 | 1 | 98 | 88 | 530 | 50 | 12 | 14 |
| Example 51 | Epoxy resin (B-11) | 0.86 | A-24C | U/0.5mm U/0.05mm | 30 | 15 | 0.027 | 15 | 0.022 | 0.051 | 76 | 67.6 | 1 | 98 | 90 | 520 | 3 | 31 | 18 |
| Comparative example 6 | Epoxy resin (B-9) | 2.62 | A-25C | H/0.5mm U/0.05mm | 70 | 15 | 0.027 | 15 | 0.102 | 0.254 | 73 | 28.9 | 1 | 55 | 48 | 540 | 120 | 7 | 16 |
| Example 52 | Epoxy resin (B-9) | 2.25 | A-26B | H/0.5mm U/0.05mm | 60 | 15 | 0.027 | 15 | 0.045 | 0.104 | 73 | 37.8 | 1 | 76 | 71 | 520 | 30 | 19 | 15 |
| Example 53 | Epoxy resin (B-9) | 1.88 | A-27B | H/0.5mm U/0.05mm | 50 | 15 | 0.027 | 15 | 0.038 | 0.08 | 73 | 47 | 1 | 94 | 81 | 520 | 25 | 23 | 15 |
| Example 54 | Epoxy resin (B-9) | 0.75 | A-28B | H/0.5mm U/0.05mm | 20 | 15 | 0.027 | 15 | 0.021 | 0.05 | 73 | 77.3 | 1 | 99 | 91 | 520 | 8 | 23 | 13 |
| Comparative example 7 | Epoxy resin (B-9) | 0.38 | A-29B | H/0.5mm U/0.05mm | 10 | 15 | 0.027 | 15 | 0.021 | 0.051 | 73 | 88.4 | 0.3 | 99 | 95 | 590 | — | 0 | — |

*1: Dispersion apparatus/beads partocle size, H: Homogenizer, U: Ultra apex mill.

Table 5

| | Resin solution | | Diepersion | | | | | | | | Content of high dielectric constant inorganic particles (wt%) | Content of solvent based on the amount of paste composition (wt%) | Film thickness (μm) | Optical transmissivity at wavelength of 400 nm (%) | Optical transmissivity at wavelength of 400 to 700 nm | | Leak current value (nA/cm²) @2V | Voltage holding ratio (%) | Relative dielectric constant @1kHz |
| | Type | Part by weight | Type | Method of dispersion *1 | Solid concentration (wt%) | Part by weight | Inorganic particle | Dispersant | Particle size distribution | | | | | | | | | | |
| | | | | | | | Average particle diameter (μm) | Content of dispersant based on the amount of inorganic particles (wt%) | 50% diameter (μm) | 90% diameter (μm) | | | | | Minimum value of optical transmissivity (%) | Wavelength (nm) | | | |
| Example 55 | Epoxy resin (B-9) | 1.13 | A-24B | U/0.5mm | 30 | 15 | 0.027 | 15 | 0.06 | 0.22 | 73 | 66.7 | 1 | 83 | 78 | 530 | 60 | 9 | 15 |
| Example 56 | Epoxy resin (B-9) | 0.84 | A-30B | H/0.5mm U/0.05mm | 30 | 15 | 0.012 | 20 | 0.013 | 0.037 | 73 | 67.5 | 1 | 99 | 92 | 520 | 0.9 | 64 | 13 |
| Example 57 | Epoxy resin (B-9) | 1.13 | A-31B | H/0.5mm U/0.05mm | 30 | 15 | 0.03 | 15 | 0.048 | 0.082 | 73 | 66.7 | 1 | 94 | 86 | 530 | 1.2 | 61 | 14 |
| Example 58 | Epoxy resin (B-9) | 1.14 | A-32B | H/0.5mm U/0.05mm | 30 | 15 | 0.06 | 3 | 0.15 | 0.27 | 73 | 66.5 | 1 | 76 | 56 | 540 | 600 | 6 | 17 |
| Example 59 | Epoxy resin (B-9) | 0.84 | A-30D | H/0.5mm U/0.05mm centrifuge | 30 | 15 | 0.008 | 20 | 0.008 | 0.019 | 73 | 67.5 | 1 | 99 | 93 | 520 | 0.7 | 68 | 13 |
| Example 60 | Epoxy resin (B-9) | 1.13 | A-33B | H/0.5mm U/0.05mm | 30 | 15 | 0.04 | 15 | 0.049 | 0.092 | 73 | 66.7 | 1 | 92 | 85 | 530 | 1.2 | 62 | 14 |
| Comparative example 8 | Epoxy resin (B-9) | - | A-34C | U/0.5mm | 30 | - | 0.027 | 1 | 0.56 | 1.3 | 73 | 88 | 1 | 5-10 | 5-10 | 400 | × | 0 | × |
| Example 61 | Epoxy resin (B-9) | 1.56 | A-35C | U/0.5mm U/0.05mm | 30 | 15 | 0.027 | 8 | 0.027 | 0.061 | 73 | 65.5 | 1 | 90 | 87 | 520 | 0.4 | 52 | 15 |
| Example 62 | Epoxy resin (B-9) | 0.84 | A-36C | U/0.5mm U/0.05mm | 30 | 15 | 0.027 | 20 | 0.021 | 0.049 | 73 | 67.5 | 1 | 99 | 91 | 520 | 0.6 | 46 | 15 |
| Example 63 | Epoxy resin (B-9) | 0.42 | A-37C | U/0.5mm U/0.05mm | 30 | 15 | 0.027 | 28 | 0.02 | 0.047 | 73 | 68.7 | 1 | 89 | 84 | 520 | 32 | 12 | 14 |
| Example 64 | Acryl resin | 6.43 | A-24C | U/0.5mm U/0.05mm | 30 | 15 | 0.027 | 15 | 0.022 | 0.051 | 35 | 52.6 | 1 | 99 | 94 | 530 | 0.6 | 89 | 5 |
| Example 65 | Acryl resin | 3.2 | A-24C | U/0.5mm U/0.05mm | 30 | 15 | 0.027 | 15 | 0.022 | 0.051 | 50 | 59.4 | 1 | 99 | 92 | 530 | 0.7 | 86 | 6 |
| Example 66 | Acryl resin | 0.83 | A-24C | U/0.5mm U/0.05mm | 30 | 15 | 0.027 | 15 | 0.022 | 0.051 | 73 | 66.7 | 1 | 98 | 89 | 530 | 1.9 | 54 | 14 |

*1: Dispersion apparatus/beads partocle size, H: Homogenizer, U: Ultra apex mill.

Table 6

| | Resin solution | | Dispersion | | | | Inorganic particle | Dispersant | Solvent | Particle diameter distribution | | Transparent film | |
| | Type | Part by weight | Type | Method of dispersion *1 | Solid concentration (wt%) | Part by weight | Average particle diameter ($\mu$m) | Content of dispersant based on the amount of inorganic particles (wt%) | | 50% diameter ($\mu$m) | 90% diameter ($\mu$m) | Model | Film thickness (%m) |
|---|---|---|---|---|---|---|---|---|---|---|---|---|---|
| Example 46 | Epoxy resin (B-9) | 1.13 | A-24C | U/0.5mm U/0.05mm | 30 | 15 | 0.027 | 15 | $\gamma$-butyrolactone | 0.022 | 0.051 | not used | 0 |
| Example 67 | Epoxy resin (B-9) | 1.13 | A-38C | U/0.5mm U/0.05mm | 30 | 15 | 0.027 | 15 | Ethyl lactate | 0.022 | 0.049 | not used | 0 |
| Example 68 | Epoxy resin (B-9) | 1.13 | A-38C | U/0.5mm U/0.05mm | 30 | 15 | 0.027 | 15 | Ethyl lactate | 0.022 | 0.049 | Defencer MCF-350SF | 0.1 |

*1: Dispersion apparatus/beads partocle size, H: Homogenizer, U: Ultra apex mill.

Table 7

| | Content of high dielectric constant inorganic particles (wt%) | Content of solvent based on the amount of paste composition (wt%) | Film thickness ($\mu$m) | Optical transmissivity at wavelength of 400 nm (%) | Optical transmissivity at wavelength of 400 to 700 nm | | Leak current value (nA/cm$^2$) @2V | Voltage holding ratio (%) | Relative dielectric constant @1kHz |
| | | | | | Minimum value of optical transmissivity (%) | Wavelength (nm) | | | |
|---|---|---|---|---|---|---|---|---|---|
| Example 46 | 73 | 66.7 | 1 | 99 | 91 | 520 | 1.1 | 66 | 15 |
| Example 67 | 73 | 66.7 | 1 | 99 | 91 | 520 | 0.5 | 83 | 14 |
| Example 68 | 73 | 66.7 | 1.1 | 98 | 90 | 530 | 0.5 | 91 | 10 |

[Industrial applicability]

The paste composition and the dielectric composition of this invention can be suitably used as a material for transparent capacitors used in the display sections of display devices, or a material kept in contact with electrolytes of electrowetting type electron paper.

**Claims**

1. A paste composition containing (a) a resin, (b) high dielectric constant inorganic particles having a perovskite crystal structure, and (c) an organic solvent, wherein the average particle diameter of the high dielectric constant inorganic particles (b) is 0.002 $\mu$m to 0.06 $\mu$m, and the amount of all organic solvents is 35 wt% to 85 wt% based on the total amount of the paste composition.

2. A paste composition, according to claim 1, wherein the average particle diameter of the high dielectric constant inorganic particles having a perovskite crystal structure (b) is 0.002 $\mu$m to 0.04 $\mu$m.

3. A paste composition, according to claim 1, wherein the resin (a) is thermosetting.

4. A paste composition, according to claim 1, wherein the resin (a) contains an acrylic resin or an epoxy resin.

5. A paste composition, according to claim 1, which further contains a dispersant, the dispersant content being 2 wt % to 25 wt% based on the amount of the high dielectric constant inorganic particles having a perovskite crystal structure (b).

6. A dielectric composition containing (a) a resin and (b) high dielectric constant inorganic particles having a perovskite crystal structure, wherein the average particle diameter of the high dielectric constant inorganic particles (b) is 0. 002 $\mu$m to 0. 06 $\mu$m.

7. A dielectric composition, according to claim 6, wherein the average particle diameter of the high dielectric constant inorganic particles having a perovskite crystal structure (b) is 0.002 $\mu$m to 0.04 $\mu$m.

8. A dielectric composition, according to claim 6, wherein the content of the high dielectric constant inorganic particles having a perovskite crystal structure (b) is 30 wt% to 99 wt% based on the total amount of the dielectric composition.

9. A dielectric composition, according to claim 6, wherein the optical transmissivity in the entire wavelength range from 400 to 700 nm is 50% to 100%.

10. A dielectric composition, according to claim 6, wherein the relative dielectric constant at a frequency of 1 kHz is 10 to 300.

11. A dielectric composition, according to claim 6, wherein the resin (a) is thermosetting.

12. A dielectric composition, according to claim 6, wherein the resin (a) contains an acrylic resin or an epoxy resin.

13. A dielectric composition, according to claim 6, which further contains a dispersant, the dispersant content being 2 wt % to 25 wt% based on the amount of the high dielectric constant inorganic particles having a perovskite crystal structure (b).

14. A capacitor having a transparent electrode, prepared by using the dielectric composition as set forth in any one of claims 6 through 13 and having an optical transmissivity of 50% to 100% in the entire wavelength range from 400 to 700 nm.

15. A process for producing the paste composition as set forth in claim 1 comprising the steps of dispersing (b) high dielectric constant inorganic particles having a perovskite crystal structure into an organic solvent using metallic, ceramic or glass beads with an average particle diameter of 0.02 mm to 0.1 mm as a dispersion medium, to prepare (d) a dispersion, and mixing the dispersion (d) and a resin or a resin solution comprising a resin and an organic solvent.

Fig. 1

<table>
<tr><td colspan="2" align="center">**INTERNATIONAL SEARCH REPORT**</td><td>International application No.<br>PCT/JP2006/317300</td></tr>
</table>

A.   CLASSIFICATION OF SUBJECT MATTER
*H01B3/00*(2006.01)i, *C04B35/00*(2006.01)i, *C08K3/00*(2006.01)i, *H01G4/12*
(2006.01)i

According to International Patent Classification (IPC) or to both national classification and IPC

B.   FIELDS SEARCHED

Minimum documentation searched (classification system followed by classification symbols)
H01B3/00, C04B35/00, C08K3/00, H01G4/12

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

C.   DOCUMENTS CONSIDERED TO BE RELEVANT

| Category* | Citation of document, with indication, where appropriate, of the relevant passages | Relevant to claim No. |
|---|---|---|
| Y | JP 2004-307607 A  (Toray Industries, Inc.),<br>04 November, 2004 (04.11.04),<br>Full text<br>(Family: none) | 1-15 |
| Y | Manabu Kawasaki et al., "Development of High-k Inorganic/Organic Composite Material for Embedded Capacitors", 2004 Electronic Components and Technology Conference, 2004, p.525-530 | 1-15 |
| Y | EP 1513165 A1  (JSR Corp.),<br>09 March, 2005 (09.03.05),<br>Claims, [0115] to [0129]; Figs. 1 to 4<br>& US 2005/0057884 A1    & JP 2005-75715 A | 1-15 |

| | | |
|---|---|---|
| ☒   Further documents are listed in the continuation of Box C. | ☐   See patent family annex. | |

| | |
|---|---|
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>24 November, 2006 (24.11.06) | Date of mailing of the international search report<br>05 December, 2006 (05.12.06) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/317300

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-91229 A  (Hitachi Maxell, Ltd.), 25 March, 2004 (25.03.04), Full text (Family: none) | 1-15 |
| Y | JP 2001-214097 A  (Matsushita Electric Industrial Co., Ltd.), 07 August, 2001 (07.08.01), Claims (Family: none) | 15 |
| A | JP 62-283620 A  (Kabushiki Kaisha Asahi Kagaku Kenkyusho), 09 December, 1987 (09.12.87), (Family: none) | 1-15 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005038821 A
- JP 2004285105 A
- JP 4070818 A
- JP 2004346288 A
- US 20058560 B